# EUROPÄISCHE PATENTANMELDUNG

(11) **EP 4 005 996 A1**
(43) Veröffentlichungstag der Anmeldung: **01.06.2022**
(21) Anmeldenummer: 20210147.3
(22) Anmeldetag: 26.11.2020
(51) Int. Cl.: C04B 26/16, C04B 40/06

(54) **POLYURETHAN-BASIERTE POLYMERBETONE UND VERGUSSMÖRTEL MIT KONTROLLIERTER DICHTE**

(71) Anmelder: SIKA TECHNOLOGY AG, 6340 Baar (CH)
(72) Erfinder: Kelch, Steffen, 8102 Oberengstringen (CH); Mamie, Tim, 8004 Zürich (CH)
(74) Vertreter: Sika Patent Attorneys

(57) **Zusammenfassung**

Die vorliegende Erfindung betrifft die Verwendung eines Trocknungsmittels zur Beeinflussung der Dichte einer aushärtbaren Bindemittelzusammensetzung umfassend a) mindestens ein organisches Bindemittel, umfassend ein Polyisocyanat und ein Polyol, b) mindestens 50 Gew.-% eines anorganischen Füllstoffs F, insbesondere in Form von Quarzaggregate und/oder Schlacke, wobei die Gewichtsanteile bezogen sind auf 100 Gew.-% der Bindemittelzusammensetzung.

## Beschreibung

### Technisches Gebiet

Die Erfindung betrifft die gezielte Beeinflussung der Dichte einer aushärtbaren Bindemittelzusammensetzung umfassend: a) mindestens ein organisches Bindemittel und b) einen Füllstoff. Weiter betrifft die Erfindung eine aushärtbare Bindemittelzusammensetzung sowie ein Mehrkomponentensystem zur Herstellung einer solchen aushärtbaren Bindemittelzusammensetzung und eine ausgehärtete Bindemittelzusammensetzung oder ein ausgehärtetes Mehrkomponentensystem.

### Stand der Technik

Polymerbeton ist ein wasserundurchlässiger Werkstoff, der typischerweise ein organisches Bindemittel und Füllstoffe enthält. Im Gegensatz zu üblichem Beton, bei dem der Zement als Bindemittel nach dem Aushärten mit Wasser die Füllstoffe zusammenhält, ist bei Polymerbeton ein organisches Polymer das Bindemittel, das nach dem chemischen Aushärten den Zusammenhalt des Materials gewährleistet. Polymerbeton enthält typischerweise keinen Zement als Bindemittel. Der Füllstoff in Polymerbeton besteht typischerweise aus natürlichem Gestein, wie beispielsweise Granit, Quarz, Basalt, Kalkstein, Blähton, Perlit oder anderen mineralischen Rohstoffen wie Schlacken aus der Metallherstellung oder festen Baustoffrecyklaten, in unterschiedlichen Korngrössen. Füllstoffe werden eingesetzt, um die mechanischen, elektrischen und/oder Verarbeitungseigenschaften von Materialien zu ändern, und gleichzeitig den Anteil der typischerweise teureren Matrix im fertigen Produkt deutlich zu verringern. Darüber hinaus sorgt die Anwesenheit der Füllstoffkörner dafür, den Volumenschrumpf des Polymerbetons nach der Aushärtung von reaktiv vernetzenden Polymermatrices signifikant zu vermindern und dessen Druckfestigkeit zu gewährleisten.

Das aushärtbare flüssige organische Bindemittel, typischerweise bestehend aus mindestens zwei reaktiven Komponenten, wird üblicherweise nach dem Vermischen der Bindemittelkomponenten mit dem Füllstoff vermischt, durch Giessen in Form gebracht und aushärten gelassen.

Bekannt als organische Bindemittel sind z.B. Epoxidharz-basierte Systeme, Polyurethan-basierte Systeme, ungesättigte Polyesterharze oder Acrylharze.

In Epoxidharz-basiertem Polymerbeton besteht das aushärtbare Bindemittel aus einem aushärtbaren Epoxidharz und einem Härter für das Epoxidharz, die nach dem Vermischen zu einem ausgehärteten Epoxidharz reagieren. In Polyurethan-basiertem Polymerbeton besteht das aushärtbare Bindemittel aus einem Polyisocyanat und einem Polyol, die nach dem Vermischen zu einem chemisch vernetzten Polyurethan reagieren.

Epoxidharz- und Polyurethan-basierte Polymerbetone zeichnen sich durch hohe Festigkeit, Frostbeständigkeit, Abriebkonsistenz und Materialbeständigkeit sowie eine geschlossene und wasserdichte Oberfläche aus. Bekannte Epoxidharz- und Polyurethan-basierte Polymerbetone weisen aber nur eine beschränkte Beständigkeit unter korrosiven Bedingungen auf.

Der steigende Bedarf an Baustoffen sowie Umweltschutzauflagen führen zur Verknappung von natürlichen mineralischen Rohstoffen, die als Füllstoffe eingesetzt werden können. Das gilt insbesondere für Quarzaggregate, wie beispielsweise Quarzmehl, Quarzsand und Quarzkies. Es gibt daher Bestrebungen, die natürlichen Rohstoffe vermehrt durch industrielle Abfallstoffe zu ersetzten.

GB 2460707 beschreibt die Verwendung von Recyclingmaterial als Aggregat für Polymerbeton. Als Teilersatz für die natürlichen Gesteine werden Glassand, Kunststoff-Perlen, zerkleinertes Porzellan oder rezyklierter Polymerbeton verwendet.

Ein industrieller Abfallstoff, der weltweit in grosser Menge anfällt, ist Schlacke. Sie fällt beispielsweise bei der Gewinnung von Metallen, beim Metallrecycling oder bei der Verbrennung von Haushaltsmüll oder Klärschlamm an. Hüttensand, eine glasige Schlacke aus der Eisengewinnung, wird aufgrund seiner latent hydraulischen Eigenschaft in feingemahlener Form als Zusatz zu Zement und als Zementersatzmaterial eingesetzt. Andere Schlacken, wie beispielsweise Stahlschlacke, die bei der Stahlerzeugung oder dem Stahlrecycling entsteht, oder Kupferschlacke, die bei der Kupfergewinnung anfällt, sind wegen ihrer geringen hydraulischen Eigenschaften als Zementersatz weniger geeignet. Sie werden, wie auch Hochofenschlacke, teilweise als Schotter im Strassenbau, als preisgünstiges Hinterfüllmaterial oder, wie beispielsweise Kupferschlacke, als Strahlmittel eingesetzt.

Die WO 2010/030048 beschreibt die Verwendung von "zerstäubter Stahlschlacke" als Bestandteil von Polymerbeton basierend auf einem ungesättigten Polyesterharz. Diese "zerstäubte Stahlschlacke" wird durch ein spezielles Verfahren hergestellt, welches zusätzliche Kosten verursacht und die Schlacke verteuert. Zerstäubte Stahlschlacke ist sowohl mengenmässig als auch örtlich nur begrenzt verfügbar.

Herkömmliche Füllstoffe, wie z.B. Quarzaggregate, lassen sich in bekannten Polymerbetonen aber nicht ohne weiteres durch industrielle Abfallstoffe ersetzen. Je nach Beschaffenheit der industriellen Abfallstoffe können bei einem teilweisen oder vollständigen Ersatz die physikalischen und chemischen Eigenschaften der Polymerbetone in unerwünschter Weise verändert werden.

Ebenfalls bekannt sind geschäumte Polymerbetone. Geschäumte Betone lassen sich ganz allgemein für Leichtbaukonstruktionen oder als Material für Wärmeisolationen einsetzen.

Die US 2017/7174569 A1 beschreibt z.B. einen aufschäumbaren Polymerbeton, bei welchem Wasser zu einer Polyurethanmischung zugegeben wird, um eine Schäumungsreaktion zu provozieren. Allerdings lässt sich die Schäumungsreaktion dabei nur sehr beschränkt kontrollieren.

Es besteht daher weiterhin Bedarf nach neuen Ansätzen und verbesserten Lösungen im Bereich der Polymerbetone, welche die vorstehend genannten Nachteile möglichst nicht aufweisen.

### Darstellung der Erfindung

Aufgabe der vorliegenden Erfindung ist es, verbesserte Polymerbetone und Vergussmassen sowie Verfahren zu deren Herstellung zur Verfügung zu stellen. Insbesondere sollen sich die Polymerbetone mit einer kontrollierten Dichte und/oder Schaumstruktur herstellen lassen und zugleich möglichst vorteilhafte Eigenschaften aufweisen. Erwünscht ist zudem, dass die Polymerbetone sowohl unter Verwendung von herkömmlichen Füllstoffen wie auch mit industriellen Abfallstoffen, welche möglichst weltweit verfügbar sind und keine aufwendige Aufbereitung benötigen, hergestellt werden können.

Überraschenderweise wird diese Aufgabe durch eine Verwendung, wie sie in Anspruch 1 beschrieben ist, gelöst.

Wie sich überraschend herausgestellt hat, lässt sich durch die Zugabe eines Trocknungsmittels die Dichte einer aushärtbaren Bindemittelzusammensetzung umfassend ein Polyurethan-basiertes Bindemittel und anorganischen Füllstoff F direkt kontrollieren. Je mehr Trocknungsmittel zugegeben wird, desto weniger stark schäumt die Bindemittelzusammensetzung beim Aushärten auf bzw. desto weniger Blasen werden gebildet und die Dichte des Materials nimmt zu. Dabei können der Grad des Schäumens und die Dichte sehr präzise kontrolliert werden, ohne dass dabei die Härtungsreaktion des organischen Bindemittels beeinträchtigt wird. Zudem führt die Anwesenheit eines Trocknungsmittels dazu, dass eine feinporigere und homogenere Struktur erreicht wird als ohne die Anwesenheit eines Trocknungsmittels. Ohne an die Theorie gebunden zu sein, dürfte die Zugabe von Trocknungsmittel die in den organischen Bindemitteln beim Aushärten intrinsisch auftretende Blasenbildung reduzieren und/oder eine gleichmässigere Verteilung der Blasen bewirken, indem die entsprechenden Gase mit dem Trocknungsmittel interagieren und/oder zumindest teilweise im Trocknungsmittel absorbiert werden. Letzteres erfolgt insbesondere im Falle der Verwendung von Molekularsieben als Trocknungsmittel. Dies führt dazu, dass die aufgrund der Blasenbildung in der ausgehärteten Bindemittelzusammensetzung gebildete Porenstruktur durch das Trocknungsmittel beeinflusst wird, wobei im Besonderen die Porendichte reduziert, die Porenform einheitlicher wird und die Porengrössenverteilung einheitlicher wird.

Wie es sich gezeigt hat, sind aufgrund der erfindungsgemässen Verwendung eines Trocknungsmittels hoch-druckfeste Schaumstrukturen mit charakteristischen Porenstrukturen herstellbar, welche fein verteilte Poren im Bereich von 1.0 mm und darunter aufweisen.

Durch die gezielte Zugabe des Trocknungsmittels kann das Volumen der ausgehärteten Bindemittelzusammensetzung je nach Gehalt an frei verfügbarem Wasser um bis zu 40 Vol.-% verändert, insbesondere reduziert, werden. Gleichermassen können die Dichten der ausgehärteten Bindemittelzusammensetzungen um bis zu 30% verändert, insbesondere erhöht, werden. Dies jeweils im Vergleich zu einer entsprechenden aushärtbaren Bindemittelzusammensetzung, welche ohne Zugabe von Trocknungsmittel hergestellt wird.

Entsprechend lässt sich das Trocknungsmittel zur Beeinflussung, insbesondere zur Erhöhung, der Dichte der aushärtbaren Bindemittelzusammensetzung im ausgehärteten Zustand verwenden. Dies insbesondere durch eine Reduktion des Porenanteils in der aushärtbaren Bindemittelzusammensetzung.

Weiter lässt sich das Trocknungsmittel zur Beeinflussung, insbesondere zur Reduktion, der Blasenbildung und/oder des Schäumens der aushärtbaren Bindemittelzusammensetzung verwenden.

Zudem lässt sich durch die Zugabe des Trocknungsmittels über die Kontrolle der Schäumung auch die thermische Leitfähigkeit der ausgehärteten Bindemittelzusammensetzungen gezielt beeinflussen.

Bei stärkerem Aufschäumen oder bei Erhöhung der Porendichte in den ausgehärteten Bindemittelzusammensetzungen nimmt die mechanische Festigkeit zwar erwartungsgemäss ab. Dies aber in einem unerwartet geringen Ausmass, so dass auch bei stark geschäumten ausgehärteten Bindemittelzusammensetzungen mit geringen Dichten immer noch gute mechanische Festigkeiten erreicht werden.

Bindemittelzusammensetzungen, die auf Polyisocyanat und Polyol basieren, haben gegenüber anderen organischen Bindemittelzusammensetzungen, die auch für Polymerbeton eingesetzt werden, insbesondere gegenüber ungesättigten Polyesterharzen oder Acrylharzen, des Weiteren den Vorteil, dass sie auch bei tiefen Temperaturen wie beispielsweise 5°C oder 10°C gut verarbeitbar und reaktiv härtbar sind, sowie eine gute Giessfähigkeit und eine gute Verlaufsfähigkeit aufweisen. Auch werden, im Gegensatz zu den oft hochviskosen ungesättigten Polyesterharzen, keine explosionsgefährlichen Initiatoren, wie etwa Peroxide, zur Härtung benötigt. Ausserdem ist die Oberfläche der ausgehärteten Bindemittelzusammensetzung auf Basis von Polyurethan fest und nicht klebrig, dies im Gegensatz zu den ungesättigten Polyesterharzen, bei denen die Oberfläche oft nur langsam oder unvollständig aushärtet.

Im Vergleich zu Epoxidharz-basierten Zusammensetzungen, welche die gleiche Gewichtskonzentration von Füllstoffen aufweisen, verfügen die erfindungsgemässen Polyurethan-basierten Zusammensetzungen bzw. die daraus erhältlichen Polymerbetone oder Vergussmassen aufgrund der gegebenen Flexibilität der Polyurethanmatrix nach dem Aushärten (7d bei Raumtemperatur) typischerweise über eine leicht geringere/reduzierte Druck-und Biegefestigkeit. Die erfindungsgemässen Polyurethan-basierten Zusammensetzungen verfügen aber gegenüber dem Epoxidharz-basierten Referenzmaterial über eine deutlich weniger ausgeprägte Quellbarkeit in Wasser und eine signifikant höhere chemische und mechanische Beständigkeit gegenüber dem Einwirken von korrosiven Medien, insbesondere gegenüber verdünnten organischen Säuren, wie z.B. wässriger Essigsäure.

Konkret hat sich gezeigt, dass die Druckfestigkeiten der Polyurethan-basierten Polymerbetone und Vergussmassen auch bei dauerhaftem Kontakt sowohl mit sauren wässrigen Lösungen (pH < 7) als auch mit neutralen wässrigen Lösungen (pH = 7) und basischen wässrigen Lösungen (pH > 7) über Wochen im Wesentlichen stabil bleiben oder sogar ein Nachhärten auftritt.

Dies im Gegensatz zu versuchsweise hergestellten Epoxidharz-basierten Zusammensetzungen, welche bei Kontakt mit basischen wässrigen Lösungen zwar ebenfalls etwas nachhärten, bei Kontakt mit sauren oder neutralen wässrigen Lösungen in Bezug auf die Druckfestigkeit mit der Zeit aber einen starken Abfall und eine deutlich sichtbare Oberflächenerosion zeigen.

Die Polyurethan-basierten Zusammensetzungen weisen somit unabhängig vom pH-Wert der korrosiven Medien eine hohe Korrosionsbeständigkeit auf. Dies ist von grossem Vorteil, weil Polymerbetone unter den jeweiligen Einsatzbedingungen typischerweise sowohl mit alkalischen als auch sauren Lösungen in Kontakt kommen können. Dies ist z.B. der Fall, wenn Polyurethan-basierte Vergussmassen in Kombination mit zementösen Materialien eingesetzt werden, aus welchen alkalische Substanzen ausgewaschen werden können, und die Vergussmassen von Zeit zu Zeit mit säurehaltigen Reinigungsmitteln, Lebensmitteln oder Fäkalien, insbesondere Urin, in Kontakt kommen.

Die genannten Vorteile der Polyurethan-basierten Zusammensetzungen lassen sich dabei sowohl mit herkömmlichen Füllstoffen, z.B. Quarzaggregate, als auch mit industriellen Abfallstoffen, insbesondere kostengünstig und weltweit erhältlichen Schlacken, realisieren. Schlacken sind dabei besonders vorteilhaft, so dass bei Bedarf gänzlich auf Quarzaggregate verzichtet werden kann.

Überraschenderweise kann Schlacke als Füllstoff in hohen Mengenanteilen und ohne Qualitätsverlust in den Polyurethan-basierten Zusammensetzungen eingesetzt werden.

Schlacke ist ein Abfallstoff aus der Metallgewinnung, dem Metallrecycling oder der Müllverbrennung und fällt weltweit in sehr grosser Menge an. Ihre Verwendung in den erfindungsgemässen Polyurethan-basierten Zusammensetzungen trägt zur Reduktion von Deponien bei und reduziert den Bedarf an qualitativ hochstehender natürlicher Gesteinskörnung, deren Verfügbarkeit immer mehr abnimmt.

Polymerbetone und Vergussmassen auf Basis von Polyurethanen, die Schlacke enthalten, zeigen gute Eigenschaften, wie insbesondere hohe Festigkeiten und gute Verarbeitbarkeiten, auch wenn die Polymerbetone und Vergussmassen gänzlich frei von üblichen Füllstoffen wie insbesondere Quarzaggregaten sind. Überraschenderweise werden die Materialeigenschaften, insbesondere die Druckfestigkeit, im Vergleich zum Stand der Technik, zum Teil sogar noch verbessert.

Besonders überraschend ist dabei der Umstand, dass erfindungsgemässe Polymerbetone und Vergussmassen, insbesondere wenn sie Stahlschlacke oder Kupferschlacke enthalten, eine verbesserte elektrische Leitfähigkeit aufweisen. Zudem kann teilweise die thermische Leitfähigkeit beeinflusst, insbesondere reduziert, werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung eines Trocknungsmittels zur Beeinflussung der Dichte einer aushärtbaren Bindemittelzusammensetzung umfassend a) mindestens ein organisches Bindemittel, umfassend ein Polyisocyanat und ein Polyol, und b) mindestens 50 Gew.-% eines anorganischen Füllstoffs F, insbesondere in Form von Quarzaggregaten und/oder Schlacke, wobei die Gewichtsanteile bezogen sind auf 100 Gew.-% Bindemittelzusammensetzung.

Unter "Schäumung" oder "Schäumen" wird vorliegend die Bildung von gasförmigen Bläschen in der aushärtbaren Bindemittelzusammensetzung durch chemische Reaktion des Isocyanathärters mit frei verfügbarem Wasser während dem Aushärten verstanden. Die gasförmigen Bläschen können dabei typischerweise Durchmesser im Bereich von Mikrometern bis zu mehreren Millimetern haben. Mit einer Schäumung ist vorliegend eine Volumenausdehnung in mindestens eine Raumrichtung verbunden. Die Schäumung in Vol.-% stellt den Quotienten aus dem Volumen der geschäumten Bindemittelzusammensetzung ohne Trocknungsmittel im Verhältnis zum Volumen der gleichen Masse an Bindemittelzusammensetzung mit einer durch das Trocknungsmittel reduzierten Schäumung dar. Ziel der Zugabe des Trocknungsmittels ist es unter anderem, den Wassergehalt in der Bindemittelzusammensetzung zu kontrollieren, so dass durch Schäumen definiert geschäumte Bindemittelzusammensetzungen, z.B. geschäumte Polymerbetone, mit einer definierten Schaumstruktur produziert werden können.

Der Begriff "Trocknungsmittel" bezeichnet vorliegend Stoffe, die Wasser chemisch und/oder physikalisch binden. Insbesondere enthält das Trocknungsmittel keinen Zement. Das Trocknungsmittel ist insbesondere ausgewählt ist aus einem Molekularsieb, Calciumoxid, Calciumchlorid, Natriumcarbonat, Kaliumcarbonat, Calciumsulfat und/oder Magnesiumsulfat. Bevorzugt als Trocknungsmittel sind ein Molekularsieb und/oder Calciumoxid. Ganz besonders bevorzugt ist ein Molekularsieb.

Der Begriff "Molekularsieb" steht vorliegend für natürliche und/oder synthetische Zeolithe. Bevorzugt handelt es sich bei den Molekularsieben um Alumosilikate mit einer porösen Gerüststruktur aus AlO₄⁻ -Tetraedern und SiO₄-Tetraedern. Eine Porenweite des Molekularsiebs beträgt insbesondere 0.3 - 1.0 nm.

Bevorzugt wird das Trocknungsmittel als Feststoff, besonders bevorzugt in Pulverform, verwendet. Ein Trocknungsmittel in Pulverform, im Besonderen ein Molekularsieb, weist bevorzugt eine Oberfläche von 200 - 1'600 m²/g, insbesondere 500 - 1'000 m²/g auf (gemessen nach dem BET-Verfahren).

Unter "Dichte" wird im vorliegenden Dokument wo nicht anders angegeben die Rohdichte eines Festkörpers verstanden. Die Rohdichte ergibt sich aus dem Quotienten des Gewichts des Festkörpers und dessen Volumen, einschliesslich des eingeschlossenen Porenvolumens.

Aushärtbare organische Bindemittelzusammensetzungen, die nach der Aushärtung ein Polyurethan darstellen, enthalten reaktiv vernetzbare Polyisocyanate mit mehr als einer Isocyanatgruppe pro Molekül, die mit Polyolen unter Ausbildung kovalenter Bindungen zu einem Feststoff reagieren.

Die erfindungsgemässe aushärtbare Bindemittelzusammensetzung ist aushärtbar, da die Isocyanatgruppen noch nicht oder erst teilweise abreagiert sind.

Unter einem "anorganischen Füllstoff" wird ein anorganischer partikulärer Stoff verstanden.

Beim Füllstoff F kann es sich beispielsweise um Schlacke, Quarzaggregate, Sand, Kies, zerkleinerte Steine, kalzinierte Kiesel, Tonmineralien, Bimsstein, Perlit, Kalkstein, Kalksteinmehl, Silicastaub, Kreide, Titandioxid, Schwerspat und/oder Aluminiumoxid handeln. Anorganische Füllstoffe sind in verschiedenen Formen und Grössen kommerziell erhältlich. Die Formen können von feinen Sandpartikeln bis zu grossen groben Steinen variieren. Der Zusatz "F" im Ausdruck "Füllstoff F" dient lediglich der besseren Lesbarkeit und Unterscheidbarkeit, hat aber keine einschränkende Wirkung.

Mit "Quarzaggregaten" sind im vorliegenden Zusammenhang partikuläre Aggregate aus Quarz gemeint. Insbesondere handelt es sich bei den Quarzaggregaten um Quarzmehl, Quarzsand und/oder Quarzkies. Besonders bevorzugt beinhalten die Quarzaggregate Quarzmehl und/oder Quarzsand.

Gemäss einer vorteilhaften Ausführungsform wird das Trocknungsmittel mit einem Anteil von maximal 1 Gew.-%, insbesondere 0.001 - 1 Gew.-%, bevorzugt 0.05 - 0.8 Gew.-%, bezogen auf 100 Gew.-% der Bindemittelzusammensetzung eingesetzt. Die 100 Gew.-% der Bindemittelzusammensetzung beinhalten dabei das zuzugebende Trocknungsmittel.

Vorteilhafterweise wird das Trocknungsmittel mit einem Anteil von maximal 15 Gew.-%, bevorzugt 0.001 - 15 Gew.-%, insbesondere 0.01 - 14 Gew.-%, besonders bevorzugt 0.1 - 13 Gew.-%, bezogen auf das Gesamtgewicht der Polyole und des Trocknungsmittels, eingesetzt.

Diese Anteile ermöglichen in den erfindungsgemässen Polyurethan-basierten Bindemittelzusammensetzungen eine sehr präzise Kontrolle der Dichte und des Schäumens in weiten Bereichen, wobei die mechanischen Eigenschaften auf einem für praktische Anwendungen relevanten Level erhalten bleiben.

Insbesondere wird zur Erhöhung des Schäumens und/oder zur Erhöhung des Porenvolumens und/oder zur Reduktion der Dichte in der ausgehärteten Bindemittelzusammensetzung der Anteil Trocknungsmittel reduziert. Die Erhöhung des Schäumens und/oder die Reduktion der Dichte erfolgt dabei insbesondere kontinuierlich mit dem Anteil an Trocknungsmittel. Wird beispielsweise auf die Zugabe eines Trocknungsmittels verzichtet, kann eine maximal geschäumte ausgehärtete Bindemittelzusammensetzung bzw. eine ausgehärtete Bindemittelzusammensetzung mit minimaler Dichte erhalten werden. Bei einem Anteil des Trocknungsmittels von 1 Gew.-%, bezogen auf 100 Gew.-% der Bindemittelzusammensetzung, kann die Schäumung dagegen minimiert bzw. die Dichte maximiert werden.

Besonders bevorzugt erfolgt die Verwendung so, dass durch die Zugabe des Trocknungsmittels mit einem Anteil von maximal 1 Gew.-%, insbesondere 0.001 - 1 Gew.-%, insbesondere 0.05 - 0.8 Gew.-%, bezogen auf 100 Gew.-% der Bindemittelzusammensetzung, das Porenvolumen der ausgehärteten Bindemittelzusammensetzung um 0.001 - 40 Vol.-%, insbesondere 2 - 35 Vol.-%, verändert wird.

Im Besonderen erfolgt die Zugabe des Molekularsiebs so, dass durch die Zugabe des Trocknungsmittels mit einem Anteil von maximal 1 Gew.-%, insbesondere 0.001 - 1 Gew.-%, bevorzugt 0.05 - 0.8 Gew.-%, bezogen auf 100 Gew.-% der Bindemittelzusammensetzung, die Dichte der ausgehärteten Bindemittelzusammensetzung im Bereich von 0.001 - 30 %, insbesondere 2 - 26 %, verändert wird.

Gemäss einer bevorzugten Ausführungsform wird das Trocknungsmittel zur Einstellung einer Dichte der ausgehärteten Bindemittelzusammensetzung im Bereich von 1.7 - 3.9 g/cm³, insbesondere 1.9 - 2.7 g/cm³, im Speziellen 2.0 - 2.5 g/cm³, verwendet, wobei bevorzugt das Trocknungsmittel mit einem Anteil von maximal 1 Gew.-%, insbesondere 0.001 - 1 Gew.-%, besonders bevorzugt 0.05 - 0.8 Gew.-%, bezogen auf 100 Gew.-% der Bindemittelzusammensetzung, zugegeben wird.

Bevorzugt wird das Trocknungsmittel zudem zur Herstellung einer ausgehärteten mineralischen Bindemittelzusammensetzung mit Schaumstruktur eingesetzt.

Die Beeinflussung der Dichte und/oder der Schäumung erfolgt insbesondere ohne Zugabe von zusätzlichem flüssigem Wasser. Dies hat den Vorteil, dass die Aushärtungsreaktion des organischen Bindemittels nicht durch Wasser beeinflusst oder beeinträchtigt wird.

Ein Gehalt an Wasser in der aushärtbaren Bindemittelzusammensetzung beträgt im Besonderen maximal 0.5 Gew.-%, insbesondere 0.01 - 0.45 Gew.-%, im Speziellen, 0.05 - 0.35 Gew.-%, bezogen auf das Gesamtgewicht der Bindemittelzusammensetzung. Dabei handelt es sich beispielsweise um Feuchtigkeit, welche an den Bestandteilen der aushärtbaren Bindemittelzusammensetzung anhaftet bzw. im Bindemittel gelöst ist.

Um den Gehalt an Wasser einzustellen, können die einzelnen Bestandteile vor der Verwendung getrocknet werden. Es ist aber auch möglich, einzelne Bestandteile vor der Verwendung zu befeuchten und/oder flüssiges Wasser getrennt von den weiteren Bestandteilen zuzugeben.

Bevorzugt werden bei der Verwendung des Trocknungsmittels in der ausgehärteten Bindemittelzusammensetzung Poren mit einem Porendurchmesser im Bereich von < 4 mm, insbesondere < 1 mm, im Speziellen < 0.1 mm erzeugt. Beispielsweise handelt es sich um Poren mit einer Porengrösse von 10 - 500 µm, im Speziellen 50 - 200 µm, im Besonderen 75 - 150 µm.

Insbesondere handelt es sich bei den Poren um geschlossenzellige Poren.

Besonders bevorzugt liegt der anorganische Füllstoff F im Rahmen der vorliegenden Erfindung in Form von Quarzaggregaten, Schlacke oder einer Mischung aus Schlacke und Quarzaggregaten vor.

Besonders bevorzugt liegt der Füllstoff F in Form von Schlacke oder einer Mischung aus Schlacke und Quarzaggregaten vor. Ganz speziell bevorzugt liegt der Füllstoff F in Form von Schlacke vor.

Bevorzugt weist der Füllstoff F, insbesondere Schlacke und/oder Quarzaggregate, eine Korngrösse bzw. Partikelgrösse von 0.1 µm - 32 mm, insbesondere 0.05 - 10 mm, auf. Besonders bevorzugt weist der Füllstoff F eine Partikelgrösse von wenigstens 0.1 mm auf, im Speziellen von 0.1 - 3.5 mm, ganz besonders bevorzugt mehr als 0.1 mm bis 3.5 mm. Die Korngrösse bzw. Partikelgrösse kann durch ein Siebverfahren gemäss DIN EN 933-1 bestimmt werden.

Weiter bevorzugt liegen im Füllstoff F wenigstens zwei, insbesondere wenigstens drei, Kornfraktionen mit unterschiedlichen Partikelgrössen vor. Die wenigstens zwei oder drei unterschiedlichen Kornfraktionen können dabei aus dem gleichen Material oder aus unterschiedlichen Materialien bestehen.

Besonders bevorzugt beinhaltet der Füllstoff F, insbesondere Quarzaggregate und/oder Schlacke, wenigstens drei verschiedene Kornfraktionen. Insbesondere verfügt eine erste Kornfraktion über eine Partikelgrösse im Bereich von 0.125 - 0.25 mm, eine zweite Kornfraktion über eine Partikelgrösse im Bereich von 0.5 - 0.8 mm und eine dritte Kornfraktion über eine Partikelgrösse im Bereich von 2.0 - 3.15 mm.

Insbesondere weist der Füllstoff F, insbesondere Quarzaggregate und/oder Schlacke, einen Anteil von mindestens 60 Gew-%, bevorzugt mindestens 65 Gew.-%, auf, bezogen auf 100 Gew.-% Bindemittelzusammensetzung.

Vorteilhaft enthält die Bindemittelzusammensetzung 50 bis 80 Gew.-%, insbesondere 60 bis 75 Gew.-%, im Speziellen 65 bis 70 Gew.-%, des Füllstoffs F, bezogen auf 100 Gew.-% Bindemittelzusammensetzung. Besonders bevorzugt handelt es sich beim Füllstoff F dabei um Quarzaggregate und/oder Schlacke, im Speziellen Schlacke.

Es kann aber auch vorteilhaft sein, speziell für hohe Festigkeiten und/oder gute elektrische Leitfähigkeiten, wenn die Bindemittelzusammensetzung 83 bis 90 Gew.-%, bevorzugt 85 bis 88 Gew.-%, des Füllstoffs F, bezogen auf 100 Gew.-% Bindemittelzusammensetzung, enthält. Hierbei handelt es beim Füllstoff F ebenfalls bevorzugt um Quarzaggregate und/oder Schlacke, im Speziellen Schlacke.

Die Bindemittelzusammensetzung enthält zusätzlich zu den mindestens 50 Gew.-% des Füllstoffs F bevorzugt noch mindestens ein zusätzliches Füllstoffmaterial.

Das zusätzliche Füllstoffmaterial unterscheidet sich vom Füllstoff, insbesondere chemisch und/oder bezüglich der Partikelgrösse. Chemisch verschieden meint, dass der Füllstoff F eine andere Summenformel aufweist als das Füllstoffmaterial.

Ein Anteil des zusätzlichen Füllstoffmaterials beträgt vorzugsweise 10 bis 40 Gew.-%, insbesondere 15 bis 35 Gew.-%, im Speziellen 20 bis 30 Gew.-%, wobei die Angaben bezogen sind auf 100 Gew.-% der Bindemittelzusammensetzung.

Die Partikelgrösse des zusätzlichen Füllstoffmaterials richtet sich nach der jeweiligen Anwendung und kann bis zu 32 mm oder mehr betragen. Bevorzugt liegt die Partikelgrösse bei maximal 16 mm, speziell bevorzugt bei maximal 8 mm. Die Partikelgrösse liegt besonders bevorzugt unter 4 mm. Vorteilhaft ist eine Partikelgrösse im Bereich von etwa 0.1 µm bis 3.5 mm.

Im Besonderen weist das zusätzliche Füllstoffmaterial eine Partikelgrösse von maximal 0.1 mm, bevorzugt im Bereich von 0.1 µm bis maximal 1 mm, auf. Vorteilhaft werden Füllstoffmaterialien von unterschiedlicher Partikelgrösse entsprechend der gewünschten Sieblinie gemischt.

Gemäss einer vorteilhaften Ausführungsform enthält die Bindemittelzusammensetzung Füllstoff F in Form von Schlacke und/oder Quarzaggregaten, mit einer Partikelgrösse von mehr als 0.1 mm und zusätzliches Füllstoffmaterial mit einer Partikelgrösse von maximal 0.1 mm und kein weiteres Füllstoffmaterial. In diesem Fall ist das zusätzliche Füllstoffmaterial bevorzugt ausgewählt aus Quarzaggregaten, Sand, Kies, zerkleinerten Steinen, kalzinierten Kieseln, Tonmineralien, Bimsstein, Perlit, Kalkstein, Kalksteinmehl, Silicastaub, Kreide, Titandioxid, Schwerspat und/oder Aluminiumoxid. Dabei können auch Mischungen aus zwei oder mehreren der genannten Vertreter vorliegen.

Insbesondere ist das zusätzliche Füllstoffmaterial ausgewählt aus der Gruppe bestehend aus Kies, Sand, zerkleinerten Steinen, kalzinierten Kieseln, Tonmineralien, Bimsstein, Perlit, Kalkstein, Kalksteinmehl, Kreide, Titandioxid, Schwerspat und/oder Aluminiumoxid. Dabei können auch Mischungen aus zwei oder mehreren der genannten Vertreter vorliegen. Besonders bevorzugt sind Kalkstein und/oder Schwerspat.

Vorteilhaft enthält die Bindemittelzusammensetzung 50 bis 80 Gew.-%, insbesondere 60 bis 75 Gew.-%, im Speziellen 65 bis 70 Gew.-%, Schlacke und/oder Quarzaggregate, sowie 10 bis 40 Gew.-%, insbesondere 15 bis 35 Gew.-%, im Speziellen 20 bis 30 Gew.-% des zusätzlichen Füllstoffmaterials, wobei die Angaben bezogen sind auf 100 Gew.-% der Bindemittelzusammensetzung. Das zusätzliche Füllstoffmaterial beinhaltet insbesondere Kalkstein und/oder Schwerspat.

Ganz besonders bevorzugt enthält die Bindemittelzusammensetzung 50 bis 80 Gew.-%, insbesondere 60 bis 75 Gew.-%, im Speziellen 65 bis 70 Gew.-%, Schlacke, sowie 10 bis 40 Gew.-%, insbesondere 15 bis 35 Gew.-%, im Speziellen 20 bis 30 Gew.-%, des zusätzlichen Füllstoffmaterials, insbesondere Kalkstein und/oder Schwerspat, wobei die Angaben bezogen sind auf 100 Gew.-% der Bindemittelzusammensetzung.

Bevorzugt enthält die Bindemittelzusammensetzung Füllstoff F in Form von Schlacke und/oder Quarzaggregate, mit einer Partikelgrösse von mehr als 0.1 mm und zusätzliches Füllstoffmaterial, das keine Schlacke und/oder Quarzaggregate ist, mit einer Partikelgrösse von maximal 0.1 mm und kein weiteres Füllstoffmaterial. Solche Zusammensetzungen lassen sich gut verarbeiten und erzielen gute Festigkeit nach dem Aushärten.

Noch weiter bevorzugt enthält die Bindemittelzusammensetzung Schlacke mit einer Partikelgrösse von mehr als 0.1 mm und zusätzliches Füllstoffmaterial, das keine Schlacke ist, mit einer Partikelgrösse von maximal 0.1 mm und keine weiteren Füllstoffmaterialien.

Ein Gewichtsanteil des zusätzlichen Füllmaterials am Gesamtgewicht der Bindemittelzusammensetzung ist bevorzugt kleiner als ein Gewichtsanteil des Füllstoffs F.

Bevorzugt ist ein Masseverhältnis des Füllstoffs F, insbesondere Quarzaggregate und/oder Schlacke, zum zusätzlichen Füllstoffmaterial, insbesondere mit einer Partikelgrösse von maximal 0.1 mm, von 100:0 bis 60:40, insbesondere von 80:20 bis 70:30. Ein solches Verhältnis bewirkt eine gute Packung der mineralischen Füllstoffe und eine gute Festigkeit der ausgehärteten Bindemittelzusammensetzung. Vorteilhaft weist der Füllstoff in diesem Fall eine Partikelgrösse von mehr als 0.1 mm auf.

Es kann aber auch vorteilhaft sein, wenn die Bindemittelzusammensetzung kein zusätzliches Füllstoffmaterial enthält. Vorzugsweise umfassen Schlacke und/oder Quarzaggregate in diesem Fall alle mineralischen Partikel mit einer Grösse von etwa 0.1 µm bis zu 1 mm, 2 mm, 4 mm, 8 mm, oder mehr. Besonders bevorzugt ist es, wenn die Bindemittelzusammensetzung als Füllstoff F ausschliesslich Schlacke und kein zusätzliches Füllstoffmaterial enthält. In diesem Fall liegen auch keine Quarzaggregate vor. Die Schlacke umfasst in diesem Fall alle mineralischen Partikel mit einer Grösse von etwa 0.1 µm bis zu 1 mm, 2 mm, 4 mm, 8 mm, oder mehr. Dies ist insbesondere vorteilhaft für eine maximale Verwertung der Schlacke und eine gute Festigkeit der ausgehärteten Bindemittelzusammensetzung, sowie, insbesondere bei eisenhaltigen Schlacken, eine verbesserte elektrische Leitfähigkeit. Zudem kann teilweise auch die thermische Leitfähigkeit beeinflusst werden.

Schlacke entsteht als Nebenprodukt bei der Gewinnung von Metallen in der Erzverhüttung, dem Metallrecycling oder bei der Abfallverbrennung. Es handelt sich um ein Stoffgemisch, das sich hauptsächlich aus den Oxiden und Silikaten verschiedener Metalle zusammensetzt. Die chemische Zusammensetzung von Schlacken wird typischerweise in Form der Oxide angegeben, unabhängig davon, in welchen Verbindungen die Elemente effektiv vorliegen. So wird beispielsweise der Gehalt an Si als SiO₂, der Gehalt an Al als Al₂O₃ und der Gehalt an Fe als FeO angegeben. So entspricht beispielsweise eine analytisch bestimmte Menge von 10 g Eisen (Fe) einer Menge von 12.9 g FeO. Der bei einer Zusammensetzung von Schlacken angegebene Prozentsatz für Bestandteile bezieht sich hierbei auf den Prozentsatz des Bestandteils als sein Oxid, bezogen auf die Summe aller Bestandteile in der Zusammensetzung, deren Gewicht ebenfalls in Form ihrer Oxide gerechnet wird. Die Hauptinhaltsstoffe von Schlacken sind CaO, SiO₂, Al₂O₃, MgO und FeO. Der Anteil dieser Stoffe in den verschiedenen Schlacketypen kann stark unterschiedlich sein. Die Zusammensetzung der Schlacke kann mit Röntgenfluoreszenzanalyse gemäss DIN EN ISO 12677 bestimmt werden.

Schlacke, insbesondere Schlacke aus der Metallgewinnung oder dem Metallrecycling, wird typischerweise in flüssigem Zustand von der Metallschmelze abgetrennt und, typischerweise in Schlackenbeeten, zur Abkühlung gelagert. Die Abkühlung kann, etwa durch Aufsprühen von Wasser, beschleunigt werden. Der Abkühlungsprozess kann die physikalischen Eigenschaften, insbesondere die Kristallinität und die Korngrösse der Schlacke, beeinflussen.

Hochofenschlacke (HOS) ist Schlacke, die bei der Gewinnung von Roheisen im Hochofen anfällt. Während des Reduktionsprozesses im Hochofen entsteht die Schlacke aus den Begleitmaterialien des Eisenerzes und den zugesetzten Schlackenbildnern wie Kalkstein oder Dolomit. Die Schlacke wird von dem Roheisen getrennt und entweder in Schlackenbeeten langsam abgekühlt, wobei die mehrheitlich kristalline Hochofenstückschlacke entsteht, oder mit Wasser und/oder Luft schnell abgekühlt, wobei der glasige Hüttensand (HS) entsteht. Hochofenschlacken weisen typischerweise einen Gehalt an Eisen, gerechnet als FeO, von unter 3 Gew.-%, bezogen auf die Gesamtzusammensetzung der Schlacke, und eine Rohdichte von 2.1 bis 2.8 kg/l, auf.

Stahlschlacke fällt bei der Stahlproduktion aus Roheisen oder dem Stahlrecycling als Nebenprodukt an. Für die Stahlerzeugung werden mehrere Verfahren und Schritte eingesetzt, bei denen Stahlschlacke anfällt. Beispiele für Stahlschlacke sind BOS, Basic Oxygen Slag, welche als Nebenprodukt bei der Stahlerzeugung nach dem Sauerstoff-Blasverfahren anfällt, LD-Schlacke, welche bei dem Linz-Donawitz-Verfahren anfällt, oder EOS, ElektroofenSchlacke, auch EAFS für Electric Arc Furnace Slag, die bei der Stahlerzeugung oder dem Stahlrecycling mittels eines Elektrolichtbogenofens anfällt. Weitere Beispiele für Stahlschlacke sind Schlacken, die bei weiteren Stahlreinigungsprozessen anfallen, wie beispielsweise Schlacke aus dem Pfannenofen (Pfannenschlacke oder Ladle Slag). Stahlschlacken weisen typischerweise einen Gehalt an Eisen von etwa 5 bis 45 Gew.-%, gerechnet als FeO, bezogen auf die Gesamtzusammensetzung der Schlacke, und eine Rohdichte von 3.0-3.7 kg/l, auf.

Weitere Prozesse, bei denen Schlacken anfallen, sind beispielsweise metallurgische Prozesse zur Gewinnung von Nicht-Eisen-Metallen. Diese Schlacken werden als Metallhüttenschlacken bezeichnet und weisen oft einen hohen Gehalt an Eisen auf. Eine solche Metallhüttenschlacke ist Kupferschlacke, die als Nebenprodukt bei der Kupfergewinnung anfällt. Kupferschlacke weist typischerweise einen hohen Gehalt an Eisen, oft von 40 Gew.-% oder mehr, gerechnet als FeO, auf. Das Eisen in Kupferschlacken liegt typischerweise zu einem Grossteil in Form von Eisensilikat vor. Kupferschlacken haben typischerweise eine Rohdichte im Bereich von 3.7 kg/l.

Schlacken, die in Abfall- oder Klärschlammverbrennungsanlagen anfallen, haben stark unterschiedliche Zusammensetzung. Oft zeichnen sie sich durch einen hohen Gehalt an Eisen aus.

Bevorzugt ist die Schlacke ausgewählt aus der Gruppe bestehend aus Hochofenschlacken, insbesondere Hochofenstückschlacken und Hüttensande, Stahlschlacken, Metallhüttenschlacken, insbesondere Kupferschlacken, und Schlacken aus der Abfallverbrennung, wobei Hochofenschlacken, Stahlschlacken und Metallhüttenschlacken bevorzugt sind. Hochofenschlacken und Stahlschlacken sind weltweit gut erhältlich und weisen typischerweise chargenbedingt nur geringe Schwankungen in ihrer chemischen und mineralogischen Zusammensetzung und den physikalischen Eigenschaften auf. Metallhüttenschlacken, insbesondere Kupferschlacke, zeichnen sich durch hohe Dichte und hohe Festigkeit aus.

In einer bevorzugten Ausführungsform der Erfindung ist die Schlacke eine eisenhaltige Schlacke mit mindestens 8 Gew.-%, insbesondere mindestens 10 Gew.-%, bevorzugt mindestens 15 Gew.-%, 20 Gew.-%, oder 25 Gew.-%, Eisen, gerechnet als FeO. Insbesondere enthält die eisenhaltige Schlacke 10 bis 70 Gew.-% Eisen, gerechnet als FeO.

Es wurde überraschend festgestellt, dass Schlacken mit einem hohen Gehalt an Eisen in der ausgehärteten Bindemittelzusammensetzung die elektrische Leitfähigkeit erhöhen und teilweise auch die thermische Leitfähigkeit reduzieren können. Sie sind daher speziell gut geeignet für die Herstellung von Materialien mit verbesserter elektrischer Leitfähigkeit und reduzierter thermischer Leitfähigkeit. Insbesondere enthalten Schlacken in den Bindemittelzusammensetzungen, die nach dem Aushärten eine verbesserte elektrische Leitfähigkeit aufweisen sollen, 10 bis 70 Gew.-%, bevorzugt 15 bis 60 Gew.-%, Eisen, gerechnet als FeO. Bevorzugt ist die eisenhaltige Schlacke eine Stahlschlacke, insbesondere Schlacke aus dem Elektrolichtbogenofen, der Giesspfanne, dem Linz-Donawitz-Verfahren oder dem Sauerstoff-Blasverfahren, oder Kupferschlacke.

In einer weiteren bevorzugten Ausführungsform weist die Schlacke eine Rohdichte von mindestens 2.9 kg/l, bevorzugt mindestens 3.1 kg/l, insbesondere mindestens 3.3 kg/l, im Speziellen mindestens 3.5 kg/l, auf. Es hat sich gezeigt, dass Bindemittelzusammensetzungen, die Schlacken von hoher Rohdichte enthalten, nach dem Aushärten an der Oberseite (obere Oberfläche) eine Schicht von ausgehärtetem Bindemittel aufweisen können, in der der Anteil an Schlacke im Vergleich zur restlichen ausgehärteten Bindemittelzusammensetzung deutlich kleiner ist. Insbesondere ist der Anteil an Schlacke mit einer Partikelgrösse über 0.1 mm in dieser Schicht unter etwa 10 Gew.-%, insbesondere unter 5 Gew.-%. Dies ergibt eine besonders gute Haftung mit einem darüber liegenden Material, was speziell vorteilhaft, beispielsweise für das Verankern von Maschinen und Turbinen durch Untergiessen, ist.

Die bevorzugte Partikelgrösse der Schlacke richtet sich nach der jeweiligen Anwendung und kann bis zu 32 mm oder mehr betragen. Vorteilhaft weist die Schlacke eine Partikelgrösse von maximal 16 mm, bevorzugt maximal 8 mm, mehr bevorzugt maximal 4 mm, im Speziellen maximal 3.5 mm, auf.

Schlackepartikel von geeigneter Grösse können auch durch Brechen und/oder Mahlen von grösseren Schlackepartikeln erhalten werden.

Die Schlacke kann, beispielsweise durch Sieben, in Korngrössenfraktionen getrennt werden und die einzelnen Korngrössenfraktionen können anschliessend in unterschiedlichen Mengen gemischt werden, um eine gewünschte Korngrössenverteilung, die Sieblinie, zu erhalten. Solche Verfahren sind dem Fachmann bekannt.

Vorteilhaft weist die Schlacke eine Partikelgrösse von 0.05 bis 16 mm, bevorzugt 0.06 bis 8 mm, mehr bevorzugt 0.1 bis 4 mm, im Speziellen 0.12 bis 3.5 mm, auf.

Bevorzugt weisen die Schlackepartikel eine unregelmässige Form und/oder eine raue Oberfläche auf und sind insbesondere nicht kugelförmig. Dies ist vorteilhaft, insbesondere für eine Verzahnung der Partikel untereinander und für einen guten Verbund mit dem Bindemittel.

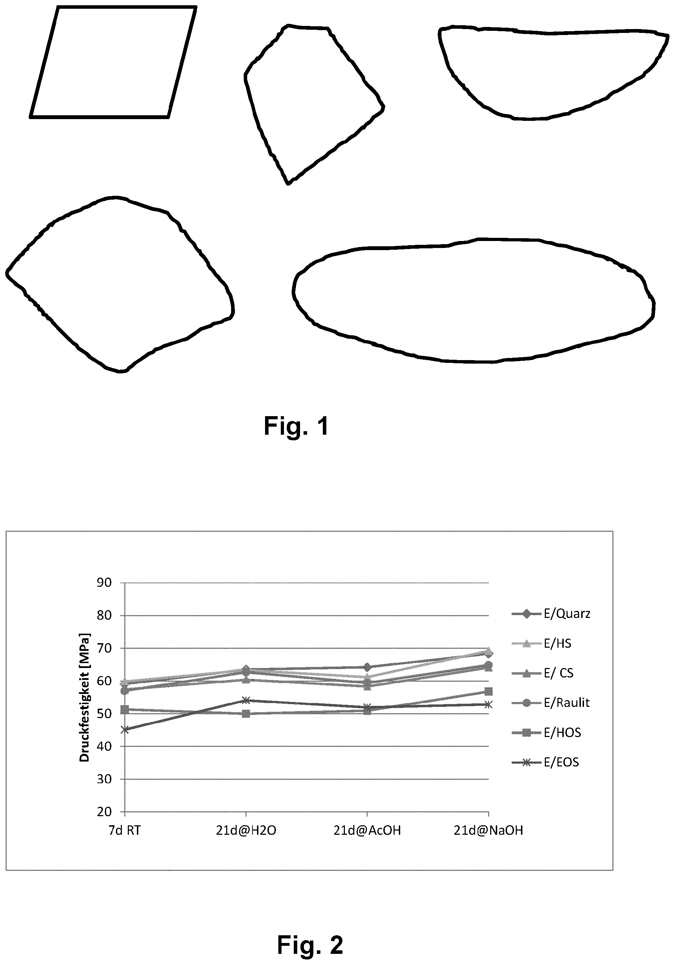

Insbesondere können die Schlackepartikel jede nicht kugelförmige geometrische Form, entweder gleichförmig oder uneinheitlich, aufweisen. Beispielsweise können die Partikel eine konische, polygonale, kubische, fünfeckige, sechseckige, achteckige, prismatische und/oder polyedrische Form aufweisen. Uneinheitliche Partikel können beispielsweise kreisförmige, elliptische, ovale, quadratische, rechteckige, dreieckige oder mehreckige Querschnitte aufweisen, die sich zumindest teilweise darin befinden. Die Ausdrücke "uneinheitlich" oder "irregulär" geformte Partikel beziehen sich auf dreidimensionale Partikelformen wobei mindestens zwei unterschiedliche Querschnitte durch die Partikel eine unterschiedliche Form aufweisen. Beispielhafte Querschnitte durch Schlackepartikel mit unregelmässiger Form sind schematisch in Fig. 1 dargestellt.

Bevorzugt wird eine Schlacke, insbesondere eine Stahlschlacke, die, insbesondere in Schlackenbeeten, mit Wasser abgekühlt wurde. Ebenso vorteilhaft ist eine Schlacke, insbesondere eine Kupferschlacke, die als Schlackenstrom mit einem Druckwasserstrahl granuliert wurde.
Durch das raschere Abkühlen bricht die Schlacke in kleine Stücke. Das ist vorteilhaft, weil dadurch Energie für das Zerkleinern eingespart werden kann und auch, weil dadurch eine unregelmässige, oft kantige Form entsteht. Bevorzugt liegt der Feuchtegehalt der Schlacke unter 5 Gew.-%, mehr bevorzugt unter 3 Gew.-%, speziell bevorzugt unter 1 Gew.-%, insbesondere unter 0.5 Gew.-%.

Für gewisse Anwendungen kann es vorteilhaft sein, wenn die Porosität der Schlacke im Bereich von 5 Vol.-% liegt. Damit kann das Gewicht des Produktes ohne grosse Beeinträchtigung der Endeigenschaften reduziert werden.
Für gewisse Anwendungen kann es auch vorteilhaft sein, wenn die Porosität der Schlacke über 5 Vol.-% liegt, damit kann das Gewicht des Produktes gesenkt werden. Für gewisse Anwendungen, speziell für hoch druckfeste Materialien, kann es auch vorteilhaft sein, wenn die Porosität der Schlacke unter 5 Vol.-%, bevorzugt unter 3 Vol.-%, liegt.

In einer besonders vorteilhaften Ausführungsform der Erfindung ist die Bindemittelzusammensetzung bevorzugt weitgehend frei von Quarzaggregaten, insbesondere von Quarzsand und Quarzmehl. Insbesondere enthält sie weniger als 10 Gew.-%, bevorzugt weniger als 5 Gew.-%, besonders bevorzugt weniger als 1 Gew.-%, Quarzaggregate. Eine solche Zusammensetzung schont die natürlichen Ressourcen und ermöglicht gute bis sehr gute Eigenschaften bei der Verarbeitung, bei der Aushärtung und im Gebrauch.

Das organische Bindemittel in der aushärtbaren Bindemittelzusammensetzung umfasst mindestens ein Polyisocyanat und mindestens ein Polyol.

Unter Polyisocyanat wird eine Verbindung verstanden, die zwei oder mehr Isocyanatgruppen enthält. Der Begriff Polyisocyanat umfasst hierbei auch Isocyanatgruppen-haltige Polymere. Polyisocyanate ergeben durch eine Reaktion mit Luftfeuchtigkeit oder mit Polyolen Polyurethane. Hierbei bezeichnet der Ausdruck "Polyurethan" Polymere, die durch die sogenannte Diisocyanat-Polyaddition gebildet werden. Diese Polymere können zusätzlich zu den Urethangruppen noch andere Gruppen, insbesondere Harnstoffgruppen aufweisen.

Als Polyisocyanat bevorzugt sind aliphatische, cycloaliphatische oder aromatische Diisocyanate, insbesondere 1,6-Hexamethylendiisocyanat (HDI), 1-Iso-cyanato-3,3,5-trimethyl-5-isocyanatomethylcyclohexan (Isophorondiisocyanat oder IPDI), Perhydro-2,4'- und/oder -4,4'-diphenylmethandiisocyanat (H₁₂MDI), 4,4'-Diphenylmethandiisocyanat, gegebenenfalls mit Anteilen von 2,4'-und/oder 2,2'-Diphenylmethandiisocyanat (MDI), 2,4-Toluylendiisocyanat oder Gemische davon mit 2,6-Toluylendiisocyanat (TDI), Gemische aus MDI und MDI-Homologen (polymeres MDI oder PMDI), Gemische aus MDI und MDI-Derivaten, insbesondere MDI-Carbodiimiden, oder oligomere Isocyanate.

Ein geeignetes Isocyanatgruppen-haltiges Polymer wird insbesondere erhalten aus der Umsetzung von mindestens einem Polyol mit einer überstöchiometrischen Menge von mindestens einem Polyisocyanat, insbesondere einem Diisocyanat, bevorzugt MDI, TDI, IPDI oder HDI. Bevorzugte isocyanatgruppen-haltige Polymere sind sogenannte Quasi-Prepolymere, welche aus der Umsetzung von mindestens einem Polyol mit einer stark überstöchiometrischen Menge von mindestens einem Polyisocyanat, insbesondere einem Diisocyanat oder Gemischen davon mit dessen Homologen oder Derivaten, erhalten werden und Gemische darstellen aus Diisocyanaten und gegebenenfalls Homologen oder Derivaten davon und deren Addukten mit Polyolen.

Als Polyisocyanat besonders bevorzugt sind aromatische Polyisocyanate, insbesondere 4,4'-Diphenylmethandiisocyanat, gegebenenfalls mit Anteilen von 2,4'- und/oder 2,2'-Diphenylmethandiisocyanat (MDI), Gemische aus MDI und MDI-Homologen (polymeres MDI oder PMDI), Gemische aus MDI und MDI-Derivaten, insbesondere MDI-Carbodiimiden, sowie Gemische aus MDI und gegebenenfalls MDI-Homologen oder -Derivaten und deren Addukte mit Polyolen.

Geeignete Polyole sind, insbesondere die folgenden handelsüblichen Polyole oder Mischungen davon:
- Polyetherpolyole, insbesondere Polyoxyalkylendiole und/oder Polyoxyalkylentriole. Bevorzugte Polyetherpolyole sind Polyoxypropylendiole, Polyoxypropylen-triole oder Ethylenoxid-terminierte (EO-endcapped) Polyoxypropylendiole oder -triole.
- Polyesterpolyole, auch Oligoesterole genannt, hergestellt nach bekannten Verfahren, insbesondere der Polykondensation von Hydroxycarbonsäuren bzw. Lactonen oder der Polykondensation von aliphatischen und/oder aromatischen Polycarbonsäuren mit zwei- oder mehrwertigen Alkoholen. Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole,
- Polyhydroxyfunktionelle Fette und Öle, auch Fettsäurepolyole genannt,
- Polykohlenwasserstoffpolyole, auch Oligohydrocarbonole genannt,
- epoxidierte Pflanzenöle sowie ihre Umsetzungsprodukte mit monofunktionellen Alkoholen,
- Polybutadien-Polyole,
- Umsetzungsprodukte von pflanzlichen Ölen, insbesondere Rizinusöl, mit Ketonharzen,
- Polyester-Polyole, die auf hydriertem Tallöl basieren,
- Polyester-Polyole, die auf Dimerfettsäuren oder Dimerfettalkoholen basieren,
- alkoxylierte Polyamine.

Bevorzugt beinhaltet das organische Bindemittel mindestens eine Mischung von Polyolen mit unterschiedlicher OH-Funktionalität.

Bevorzugt umfasst die Bindemittelzusammensetzung mindestens ein aromatisches Polyisocyanat und mindestens ein Polyol, ausgewählt aus der Gruppe bestehend aus epoxidierten Pflanzenölen sowie deren Umsetzungsprodukten mit monofunktionellen Alkoholen, Polybutadien-Polyolen, Umsetzungsprodukten von pflanzlichen Ölen, insbesondere Rizinusöl, mit Ketonharzen, Polyester-Polyolen, die auf hydriertem Tallöl basieren, und Polyester-Polyolen, die auf Dimerfettsäuren oder Dimerfettalkoholen basieren.

Speziell vorteilhaft sind Kombinationen von Polyisocyanaten und Polyolen wie sie in EP 3 339 343 und EP 3 415 544 beschrieben sind.

Solche Bindemittelzusammensetzungen sind besonders hydrophob, nehmen nach dem Aushärten keine Feuchtigkeit auf und sind hydrolysestabil, was vorteilhaft ist.

Als Katalysatoren sind metallorganische Verbindungen oder Amine, insbesondere sekundäre und tertiäre Amine, geeignet.

Bevorzugt ist mindestens ein Netz- und/oder Dispergiermittel, insbesondere auf der Basis eines Polycarboxylatethers, in der Bindemittelzusammensetzung vorhanden. Dies ermöglicht eine bessere Verarbeitbarkeit, insbesondere gute Fliessfähigkeit, und einen hohen Anteil an Füllstoffen, was vorteilhaft für eine gute Homogenität und Festigkeit der ausgehärteten Bindemittelzusammensetzung ist.

Unter Polycarboxylatether wird in diesem Dokument ein Kammpolymer verstanden, bei dem sowohl anionische Gruppen als auch Polyalkylenglycol-Seitenketten kovalent an das Polymerrückgrat gebunden sind. Solche Polymere sind als Verflüssiger für mineralische Bindemittel wie Zement und Gips bekannt.

Bevorzugte Polycarboxylatether umfassen Struktureinheiten der Formel I und Struktureinheiten der Formel II, 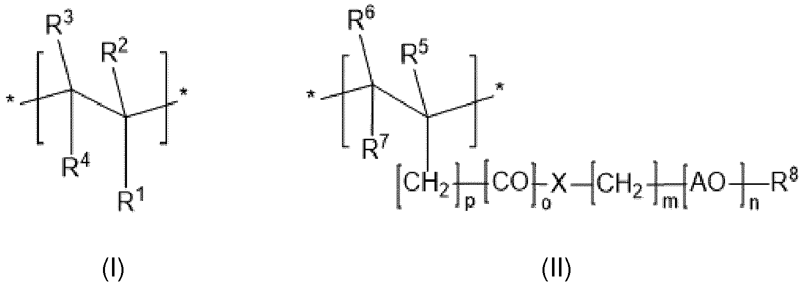 wobei
R¹, jeweils unabhängig voneinander -COOM, -SO₂-OM, -O-PO(OM)₂ und/oder -PO(OM)₂, bevorzugt -COOM, ist,
R² und R⁵, jeweils unabhängig voneinander H, -CH₂-COOM oder eine Alkylgruppe mit 1 bis 5 Kohlenstoffatomen, bevorzugt H oder -CH₃, sind,
R³ und R⁶, jeweils unabhängig voneinander H oder eine Alkylgruppe mit 1 bis 5 Kohlenstoffatomen, bevorzugt H, sind,
R⁴ und R⁷, jeweils unabhängig voneinander H, -COOM oder eine Alkylgruppe mit 1 bis 5 Kohlenstoffatomen, bevorzugt H, sind,
oder R¹ und R⁴ einen Ring zu -CO-O-CO- (Anhydrid) formen,
M, jeweils unabhängig voneinander H⁺, ein Alkalimetallion, ein Erdalkalimetallion, ein di- oder trivalentes Metallion, eine Ammoniumgruppe oder ein organisches Ammonium, bevorzugt ein H⁺ oder ein Alkalimetallion, ist, p = 0, 1 oder 2,
o = 0 oder 1,
m = 0, oder eine ganze Zahl von 1 bis 4,
n = 2 - 250, insbesondere 10 - 200,
X, jeweils unabhängig voneinander -O- oder -NH- ist,
R⁸, jeweils unabhängig voneinander H, eine C₁- bis C₂₀-Alkylgruppe, - Cyclohexylgruppe oder -Alkylarylgruppe ist, und
A = C₂- bis C₄-Alkylen, bevorzugt Ethylen.

Bevorzugt ist das molare Verhältnis von Struktureinheit I zu Struktureinheit II 0.7 - 10 : 1, mehr bevorzugt 1 - 8 : 1, insbesondere 1.5 - 5 : 1.

Es kann auch vorteilhaft sein, wenn der Polycarboxylatether weiter noch eine Struktureinheit III umfasst. Bevorzugt ist Struktureinheit III abgeleitet von Monomeren ausgewählt aus der Gruppe bestehend aus Alkyl- oder Hydroxyalkylestern der Acrylsäure- oder Methacrylsäure, Vinylacetat, Styrol und N-Vinylpyrrolidon.

Bevorzugt enthält der Polycarboxylatether Carbonsäuregruppen und/oder deren Salze und Polyethylenglykol-Seitenketten.

Bevorzugt ist der Polycarboxylatether aus Struktureinheiten I, die abgeleitet von ethylenisch ungesättigten Carbonsäuren, insbesondere ungesättigten Monocarbonsäuren, oder deren Salzen sind, und Struktureinheiten II, die abgeleitet von ethylenisch ungesättigten Polyalkylenglykolen, insbesondere Polyethylenglykolen, sind, aufgebaut. Insbesondere enthält der Polycarboxylatether ausser Struktureinheiten I und Struktureinheiten II keine weiteren Struktureinheiten.

Bevorzugt ist der Füllstoff F, insbesondere Quarzaggregate und/oder Schlacke, und gegebenenfalls auch das zusätzliche Füllstoffmaterial, falls vorhanden, mit dem Netz- und/oder Dispergiermittel beschichtet. Die Beschichtung kann hierbei durch einfaches Aufsprühen, entweder eines flüssigen Netz- und/oder Dispergiermittels oder einer Lösung eines flüssigen oder festen Netz- und/oder Dispergiermittels in einem geeigneten Lösungsmittel, erfolgen.

Bevorzugt weist das Polyisocyanat und das Polyol, bezogen auf 100 Gew.-% Bindemittelzusammensetzung, zusammen einen Anteil von mindestens 5 Gew-%, bevorzugt mindestens 10 Gew.-%, im Besonderen 8 - 22 Gew.-%, im Speziellen 10 - 15 Gew.-%, auf.

Ein weiterer Aspekt der vorliegenden Erfindung betrifft eine aushärtbare Bindemittelzusammensetzung, umfassend: a) mindestens ein organisches Bindemittel, umfassend ein Polyisocyanat und ein Polyol, b) mindestens 50 Gew.-% eines anorganischen Füllstoffs F, insbesondere Quarzaggregate und/oder Schlacke, und c) ein Trocknungsmittel, wobei die Gewichtsanteile bezogen sind auf 100 Gew.-% Bindemittelzusammensetzung

Gemäss einer vorteilhaften Ausführungsform weist das Trocknungsmittel einen Anteil von maximal 1 Gew.-%, insbesondere 0.001 - 1 Gew.-%, besonders bevorzugt 0.05 - 0.8 Gew.-%, bezogen auf 100 Gew.-% der Bindemittelzusammensetzung auf.

Vorteilhafterweise weist das Trocknungsmittel einen Anteil von maximal 15 Gew.-%, bevorzugt 0.001 - 15 Gew.-%, insbesondere 0.01 - 14 Gew.-%, besonders bevorzugt 0.1 - 13 Gew.-%, bezogen auf das Gesamtgewicht der Polyole und des Trocknungsmittels zusammen, auf.

Das organische Bindemittel, das Polyol, das Polyisocyanat und der Füllstoff F sowie allenfalls vorhandene weitere Bestandteile sind bevorzugt wie vorstehend im Zusammenhang mit der Verwendung beschrieben, ausgewählt.

Eine vorteilhafte Bindemittelzusammensetzung enthält:
- 3 bis 40 Gew.-% Polyisocyanate,
- 3 bis 40 Gew.-% Polyole,
- 50 bis 93.999 Gew.-% des Füllstoffs F, insbesondere Schlacke und/oder Quarzaggregate, wobei bevorzugt mindestens 20 Gew.-% des Füllstoffs F eisenhaltige Schlacke ist,
- 0.001 - 1 Gew.-%, insbesondere 0.05 - 0.8 Gew.-% Trocknungsmittel,
- optional 10 bis 40 Gew.-%, insbesondere 15 bis 35 Gew.-%, im Speziellen 20 bis 30 Gew.-%, zusätzliches Füllstoffmaterial, insbesondere Kalkstein und/oder Schwerspat,
- 0 bis 15 Gew.-% weitere Additive, und
- 0 bis 0.5 Gew.-% Wasser,
bezogen auf 100 Gew.-% Bindemittel-Zusammensetzung.

Bevorzugt liegen die erfindungsgemässen Bindemittelzusammensetzungen vor ihrer Verwendung als Mehrkomponentensystem vor, insbesondere als System mit zwei oder drei Komponenten. Bevorzugt liegen die Bestandteile, die miteinander in einer Härtungsreaktion reagieren können, in getrennt voneinander gelagerten Behältnissen vor. In dieser Form kann die Bindemittelzusammensetzung über einen Zeitraum von mehreren Monaten bis zu einem Jahr und länger gelagert werden, ohne dass sich ihre Eigenschaften in einem für ihren Gebrauch relevanten Ausmass verändern. Erst bei der Anwendung der Bindemittelzusammensetzung werden die reaktiven Komponenten des organischen Bindemittels miteinander vermischt, worauf die Aushärtung der Bindemittelzusammensetzung beginnt.

Ein weiterer Gegenstand der Erfindung ist ein Mehrkomponentensystem zur Herstellung einer aushärtbaren Bindemittelzusammensetzung umfassend mindestens eine Polyisocyanat-Komponente, umfassend mindestens ein Polyisocyanat, und mindestens eine Polyol-Komponente, umfassend mindestens ein Polyol, wobei der Füllstoff F, das Trocknungsmittel und optional weitere Inhaltsstoffe in der Polyisocyanat-Komponente, der Polyol-Komponente und/oder einer weiteren Komponente, einer Feststoff-Komponente, vorhanden sind.

Besonders bevorzugt liegt das Trocknungsmittel in der Polyol-Komponente vor. Im Besonderen verfügt das Trocknungsmittel in der Polyolkomponente über einen Anteil von 0.01 - 15 Gew.-%, insbesondere 0.1 - 13 Gew.-%, bezogen auf das Gesamtgewicht der Polyole und des Trocknungsmittels zusammen.

Bevorzugt liegt das Gewichts-Verhältnis der Polyisocyanat-Komponente zur Polyol-Komponente im Bereich von 2:1 bis 1:3, mehr bevorzugt bei 1:1 bis 1:2. Bevorzugt liegt das Gewichts-Verhältnis von Polyisocyanat-Komponente plus Polyol-Komponente zur Feststoff-Komponente bei 1:3 bis 1:12, insbesondere bei 1:4 bis 1:10.

Bevorzugt umfasst das Mehrkomponentensystem eine Feststoff-Komponente, enthaltend den Füllstoff F, besonders bevorzugt Schlacke. Bevorzugt umfasst die Feststoff-Komponente mindestens 60 Gew.-%, bevorzugt mindestens 70 Gew.-%, im Speziellen mindestens 80 Gew.-%, oder mindestens 90 Gew.-%, vorteilhaft sogar 100 Gew.-% Schlacke und/oder Quarzaggregate, insbesondere Schlacke.

Bevorzugt enthält die Feststoff-Komponente neben Schlacke und/oder Quarzaggregaten das optionale zusätzliche Füllstoffmaterial, das optionale Netz- und/oder Dispergiermittel und gegebenenfalls weitere Additive.

Eine bevorzugte Zusammensetzung der Feststoff-Komponente umfasst:
- 70 bis 90 Gew.-% Schlacke und/oder Quarzaggregate, bevorzugt Schlacke, insbesondere mit einer Partikelgrösse von 0.1 bis 16 mm, bevorzugt 0.11 bis 8 mm, insbesondere 0.12 bis 4 mm,
- 10 bis 30 Gew.-% zusätzliches Füllstoffmaterial, insbesondere mit einer Partikelgrösse von maximal 0.1 mm, insbesondere etwa 0.1 µm bis 0.1 mm,
- 0 bis 2 Gew.-%, insbesondere 0.01 bis 1.5 Gew.-%, Additive, umfassend mindestens ein Netz- oder Dispergiermittel, insbesondere einen Polycarboxylatether, und
- 0 bis 5 Gew.-% eines organischen Lösungsmittels, insbesondere eines Lösungsmittels, in welchem der Polycarboxylatether löslich ist.

Eine weitere bevorzugte Zusammensetzung der Feststoff-Komponente umfasst:
- 93 bis 100 Gew.-%, bevorzugt 95 bis 99.97 Gew.-%, Schlacke und/oder Quarzaggregate, bevorzugt Schlacke, insbesondere mit einer Partikelgrösse von etwa 0.1 µm bis 16 mm, bevorzugt etwa 0.1 µm bis 8 mm, insbesondere etwa 0.1 µm bis 4 mm,
- 0 bis 1.5 Gew.-%, bevorzugt 0.01 bis 1 Gew.-%, eines Polycarboxylatethers und
- 0 bis 5 Gew.-%, bevorzugt 0.02 bis 4 Gew.-%, eines organischen Lösungsmittels, in welchem der Polycarboxylatether löslich ist.

Ein weiterer Gegenstand der Erfindung ist die Verwendung der Bindemittel-zusammensetzung oder des Mehrkomponentensystems zum Verkleben, Beschichten oder Abdichten von Substraten, zum Verfüllen von Kanten, Löchern oder Fugen, als Verankerung- oder Injektionsharz, als Untergiessoder Vergussmasse, als Bodenbelag und/oder zur Herstellung von Formkörpern.

Weiter betrifft die Erfindung die Verwendung der Bindemittelzusammensetzung oder des Mehrkomponentensystems zur Herstellung von Polymerbetonen und/oder Vergussmassen, welche gegenüber korrosiven Substanzen, insbesondere sauren und/oder basischen wässrigen Lösungen, eine verbesserte Korrosionsbeständigkeit aufweisen. Bevorzugt verbessert sich die Korrosionsbeständigkeit sowohl gegenüber sauren, neutralen als auch basischen wässrigen Lösungen.

Unter einer sauren Lösung wird dabei insbesondere eine Lösung mit einem pH < 7, bevorzugt < 4, verstanden. Eine basische Lösung meint im Besonderen eine Lösung mit einem pH > 7, bevorzugt > 10.

Unter einer "verbesserten Korrosionsbeständigkeit" wird dabei insbesondere verstanden, dass die Druckfestigkeit des Polymerbetons oder der Vergussmasse nach 7-tägigem Aushärten bei 20°C, anschliessender Lagerung in einer wässrigen 10 Vol.-%-igen Essigsäurelösung, einer neutralen wässrigen Lösung und/oder einer wässrigen 50 Gew.-%-igen NaOH-Lösung bei 20°C während 21 Tagen und darauffolgender Trocknung bis zur Gewichtskonstanz um weniger als 10%, insbesondere weniger als 5%, bevorzugt weniger als 1%, abnimmt. Die Druckfestigkeit wird dabei bevorzugt nach Norm ASTM D695 bestimmt.

Der Füllstoff F in der Bindemittelzusammensetzung oder dem Mehrkomponentensystem ist dabei bevorzugt Schlacke, insbesondere eisenhaltige Schlacke.

Ein Anteil der Schlacke beträgt dabei insbesondere mindestens 60 Gew-%, bevorzugt mindestens 65 Gew.-%, bezogen auf 100 Gew.-% Bindemittelzusammensetzung.

Noch weiter bevorzugt enthält die Bindemittelzusammensetzung Schlacke mit einer Partikelgrösse von mehr als 0.1 mm und zusätzliches Füllstoffmaterial, das keine Schlacke ist, mit einer Partikelgrösse von maximal 0.1 mm und keine weiteren Füllstoffmaterialien.

Die Bindemittelzusammensetzung oder das Mehrkomponentensystem sind daher besonders geeignet für Anwendungen, in welchen diese mit korrosiven Substanzen, insbesondere sauren und/oder basischen wässrigen Lösungen in Kontakt kommen.

Ein weiterer Aspekt der Erfindung betrifft daher die Verwendung der Bindemittelzusammensetzung oder des Mehrkomponentensystems für Anwendungen, in welchen die Bindemittelzusammensetzung oder das Mehrkomponentensystem nach dem Aushärten mit korrosiven Substanzen, insbesondere sauren und/oder basischen wässrigen Lösungen, in Kontakt kommt.

Bevorzugt handelt es sich dabei um Anwendungen, bei welchen die Bindemittelzusammensetzung oder das Mehrkomponentensystem nach dem Aushärten mit sauren als auch mit basischen wässrigen Lösungen in Kontakt kommt.

Ein weiterer Aspekt der vorliegenden Erfindung betrifft die Verwendung der ausgehärteten Bindemittelzusammensetzung oder eines ausgehärteten Mehrkomponentensystems zum Leiten von elektrischem Strom, insbesondere zum Ableiten von elektrostatischen Ladungen und/oder zum Ausgleich des elektrischen Potentials zwischen zwei Körpern.

Ein weiterer Gegenstand der Erfindung ist die Verwendung der erfindungsgemässen Bindemittelzusammensetzung oder des erfindungsgemässen Mehrkomponentensystems für die Herstellung von Materialien mit bei 20°C verbesserter elektrischer Leitfähigkeit, dadurch gekennzeichnet, dass die Schlacke in der Bindemittelzusammensetzung eine eisenhaltige Schlacke mit mindestens 8 Gew.-% Eisen, gerechnet als FeO, bezogen auf das Gesamtgewicht der Schlacke, und/oder eine Schlacke mit einer Rohdichte von mindestens 3.1 kg/l, ist.

Überraschenderweise zeigt eine solche ausgehärtete Bindemittelzusammensetzung eine verbesserte elektrische Leitfähigkeit im Vergleich zu einer ausgehärteten Bindemittelzusammensetzung, die anstelle der eisenhaltigen Schlacke die gleiche Gewichtsmenge an Quarzaggregaten mit gleicher Sieblinie enthält.

Das Material mit verbesserter elektrischer Leitfähigkeit weist bevorzugt einen um mindestens einen Faktor von 2, mehr bevorzugt mindestens 2.5, insbesondere mindestens 3.0, verringerten spezifischen elektrischen Durchgangswiderstand auf, im Vergleich zu einem ansonsten identischen Material, das aber anstatt der eisenhaltigen Schlacke Quarzaggregate von gleicher Partikelgrösse enthält. Der elektrische Durchgangswiderstand wird zwischen den zwei gegenüber liegenden 40 x 40 mm Flächen eines Prismas von 40 x 40 x 160 mm durch Anlegen einer Spannung von 100 mV und einer Frequenz von 1 kHz, bei 20°C, bestimmt, wobei die Messung nach 7 Tagen Lagerung bei 20°C, durchgeführt wird.

Ebenfalls Gegenstand der Erfindung ist die Verwendung einer erfindungsgemässen aushärtbaren Bindemittelzusammensetzung zur Herstellung eines thermisch isolierenden Materials. Durch die Verwendung von Schlacke anstelle von Quarzaggregaten kann die thermische Leitfähigkeit reduziert werden.

Besonders vorteilhaft für das Untergiessen von Maschinen sind aushärtbare Bindemittelzusammensetzungen, die Schlacken mit einer Rohdichte von mindestens 2.9 kg/l, insbesondere mindestens 3.1 kg/l, bevorzugt mindestens 3.3 kg/l, im Speziellen mindestens 3.5 kg/l, umfassen. Dadurch kann ein speziell guter Verbund zwischen der ausgehärteten Bindemittelzusammensetzung und der darüber liegenden Maschine oder Turbine, welche untergossen wurde, sowie eine gute Druckfestigkeit des untergossenen Materials erhalten werden.

Die Verwendung des Mehrkomponentensystems erfolgt, indem die Komponenten vermischt werden. Es werden hierbei vorteilhaft zuerst die mindestens zwei Komponenten, umfassend die Bestandteile des organischen Bindemittels, gut gemischt und anschliessend die Komponente, umfassend die den Füllstoff F, insbesondere Schlacke, falls eine solche separate Komponente vorhanden ist, gut eingemischt. Dabei können auch weitere Komponenten oder Zusatzmittel hinzugefügt werden. Nach der Vermischung aller Komponenten erfolgt die Aushärtung. Solche Verarbeitung ist dem Fachmann bekannt.

Überraschenderweise lässt sich die frisch gemischte aushärtbare Bindemittelzusammensetzung trotz des hohen Anteils an Füllstoff F, insbesondere Schlacke, bei Umgebungstemperaturen sehr gut und homogen verarbeiten.

Es kann auch vorteilhaft sein, insbesondere für die Verwendung der erfindungsgemässen Bindemittelzusammensetzung als Ausgleichsmörtel, Estrich oder Bodenbeschichtung, wenn eine erfindungsgemässe Bindemittelzusammensetzung in folgenden Schritten gemischt und appliziert wird:
- Vermischen aller Komponenten der Bindemittelzusammensetzung, ausser den Füllstoffen mit einer Partikelgrösse von mehr als 0.06 mm, mit geeigneten Mischgeräten,
- Applizieren der Mischung als Ausgleichsmörtel, Estrich oder Bodenbeschichtung, und
- Einstreuen der Füllstoffe mit einer Partikelgrösse von mehr als 0.06 mm, wobei mindestens 20 Gew.-% dieser Füllstoffe eisenhaltige Schlacke sind, von Hand oder mit einer geeigneten Vorrichtung.

Ein weiterer Gegenstand der Erfindung ist eine ausgehärtete Bindemittelzusammensetzung, erhalten durch Aushärten der erfindungsgemässen aushärtbaren Bindemittelzusammensetzung oder durch Vermischen der Komponenten und Aushärten des erfindungsgemässen Mehrkomponentensystems.

Die Aushärtung erfolgt bevorzugt bei Umgebungstemperaturen, insbesondere bei einer Temperatur im Bereich von 5 bis 40°C, bevorzugt 7 bis 35°C.

Die Bindemittelzusammensetzung ist ausgehärtet, wenn keine wesentlichen Reaktionen mehr zwischen Isocyanatgruppen und den Hydroxylgruppen des Polyols stattfinden. Die ausgehärtete Bindemittelzusammensetzung weist eine feste Konsistenz auf. Sie kann insbesondere in Form eines dreidimensionalen Gegenstandes oder Bauteils, oder als Beschichtung, Haftbrücke, Spachtelmasse, Bestandteil eines Laminats, Klebstoff, Füllung oder Dichtung vorliegen.

Bevorzugt weist die ausgehärtete Bindemittelzusammensetzung eine poröse Struktur auf oder die ausgehärtete Bindemittelzusammensetzung liegt als geschäumter Körper vor. Im Besonderen handelt es sich bei den Poren mit einer maximalen Porengrösse < 4 mm, insbesondere < 1 mm, im Speziellen kleiner 0.1 mm auf. Beispielsweise handelt es sich um Poren mit einer Porengrösse von 10 - 500 µm, im Speziellen 50 - 200 µm, im Besonderen 75 - 150 µm. Dabei handelt es sich bevorzugt um geschlossenzellige Poren.

Die Dichte der ausgehärteten Bindemittelzusammensetzung liegt bevorzugt im Bereich von 1.7 - 3.9 g/cm³, insbesondere 1.9 - 2.7 g/cm³, im Speziellen 2.0 - 2.5 g/cm³.

Im Speziellen ist die Dichte der ausgehärteten Bindemittelzusammensetzung grösser als die Dichte einer ausgehärteten Bindemittelzusammensetzung, welche kein Trocknungsmittel enthält, ansonsten aber die gleiche Zusammensetzung aufweist.

Bevorzugt sind der Füllstoff F, insbesondere Quarzaggregate und/oder Schlacke, und das Füllstoffmaterial, falls vorhanden, gleichmässig oder im Wesentlichen gleichmäßig in der ausgehärteten Bindemittelzusammensetzung verteilt.

Es kann aber auch vorteilhaft sein, insbesondere für Unterfüllungen, beispielsweise von Maschinen und Turbinen, wenn die Konzentration an Füllstoff F, insbesondere Schlacke, in der obersten Schicht der horizontalen Oberfläche der ausgehärteten Bindemittelzusammensetzung kleiner als in der restlichen ausgehärteten Bindemittelzusammensetzung, insbesondere unter 10 Gew.-%, ist. Dies kann den Verbund zwischen der Bindemittelzusammensetzung und dem zu unterfüllenden Objekt verbessern.

### Kurze Beschreibung der Figuren

- Fig. 1 zeigt:: eine schematische Darstellung von beispielhaften Querschnitten von Schlackepartikeln mit unregelmässiger Form;
- Fig. 2 zeigt:: die Druckfestigkeiten von erfindungsgemässen Probenkörpern mit Polyurethan-Matrix und unterschiedlichen Füllstoffen nach Lagerung in verschiedenen Medien (H₂O, AcOH oder NaOH);
- Fig. 3 zeigt:: die Druckfestigkeiten von weiteren erfindungsgemässen Probenkörpern mit Polyurethan-Matrix und unterschiedlichen Füllstoffen nach Lagerung in verschiedenen Medien;
- Fig. 4 zeigt:: die Druckfestigkeiten von Epoxidharz-basierten Probenkörpern mit unterschiedlichen Füllstoffen nach Lagerung in verschiedenen Medien;
- Fig. 5 zeigt:: ausgehärtete Probenkörper aus Polyurethan-basiertem Vergussmörtel, welche durch unterschiedlich Mengen an Trocknungsmittel kontrolliert geschäumt wurden;
- Fig. 6 zeigt:: auf der linken Seite einen Querschnitt durch eine stark geschäumte Polyurethan-basierte Vergussmörtelprobe und auf der rechten Seite einen Querschnitt durch eine ungeschäumte Probe, die Luftblasen aufweist;
- Fig. 7a-e zeigen:: Rasterelektronenmikroskopische Aufnahmen von ausgehärteten Proben der Polyurethan-Matrix E mit unterschiedlicher Porosität;
- Fig. 8a-e zeigen:: Rasterelektronenmikroskopische Aufnahmen von ausgehärteten Proben der Polyurethan-Matrix E und 89 Gew.-% Quarzsand mit unterschiedlichen Anteilen an Molekularsieb.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"Bsp.": steht für "Beispiel"
"Ref.": steht für "Referenz-Beispiel"

### Verwendete Materialien

Setathane^{®} 1150 ist ein Polyol auf Basis eines Umsetzungsprodukts von Rizinusöl mit Ketonharzen (Allnex Resins Germany GmbH, Deutschland)

Desmophen^{®} T4011 ist ein Polyetherpolyol basierend auf 1,1,1-Trimethylolpropan (Covestro AG, Deutschland)

Sylosiv^{®} ist ein Molekularsiebpulver auf Zeolith-Basis mit 3 - 5 Å Porendurchmesser und einer Oberfläche von ca. 800 m²/g (W. R. Grace & Co., USA)

Desmodur^{®} VL ist ein aromatisches Polyisocyanat basierend auf Diphenylmethandiisocyanat (Covestro AG, Deutschland)

Desmodur^{®} CD-L ist ein aromatisches Polyisocyanat basierend auf 4,4'-Diphenylmethandiisocyanat (Covestro AG, Deutschland).

Neukapol^{®} 1119 ist ein Umsetzungsprodukt von epoxidierten Pflanzenölen (Rapsöl) mit einem Anteil an ungesättigten C-18-Fettsäuren von 91 Gew.-%, bezogen auf die Gesamtmenge an Fettsäuren, mit monofunktionellen C₁₋₈-Alkoholen; OH-Funktionalität 2.0, mittleres Molekulargewicht ca. 390 g/mol, OH-Zahl von 290 mg KOH/g (Altropol Kunststoff GmbH, Deutschland)

Neukapol^{®} 1582 ist ein Umsetzungsprodukt von epoxidierten Fettsäuremethylestern mit Glycerin, wobei den epoxidierten Fettsäuremethylestern als Fettsäurekomponente Fettsäuregemische von Rapsöl oder Sonnenblumenöl zugrunde liegen, in Abmischung mit N,N,N',N'-Tetrakis(2-hydroxypropyl)-ethylendiamin (Altropol Kunststoff GmbH, Deutschland).

Der Quarzsand und die Schlacken wurden vor der Verwendung getrocknet und durch Sieben in Kornfraktionen aufgeteilt. Die Kornfraktionen wurden anschliessend so gemischt, dass die Korngrössenverteilung der verwendeten Sande einer vorgegebenen Korngrössenverteilung (Sieblinie) entsprach.

EOS ist eine Elektroofenschlacke von Stahl Gerlafingen AG, Schweiz. Das eingesetzte Material hatte eine Rohdichte von etwa 3.3 kg/l und einen Gehalt an Eisen, gerechnet als FeO, von etwa 19 Gew.-%.

HOS ist eine Hochofenstückschlacke der Hüttenwerke Krupp Mannesmann, Deutschland, erhältlich von der Firma Hermann Rauen GmbH & Co., Deutschland. Das eingesetzte Material hatte eine Rohdichte von 2.9 kg/l und einen Gehalt an Eisen, gerechnet als FeO, von etwa 3 Gew.-%.

Raulit^{®} ist eine Hochofenschlacke der DK-Recycling und Roheisen GmbH, Deutschland, erhältlich unter dem Markennamen Raulit^{®}-Mineralbaustoffgemisch von der Firma Hermann Rauen GmbH & Co., Deutschland. Das eingesetzte Material hatte eine Rohdichte von etwa 2.9 kg/l und einen Gehalt an Eisen, gerechnet als FeO, von etwa 1 Gew.-%.

HS ist ein Hüttensand von voestalpine AG, Österreich. Das eingesetzte Material hatte eine Rohdichte von etwa 2.9 kg/l und einen Gehalt an Eisen, gerechnet als FeO, von unter 1 Gew.-%.

CS ist NAstra^{®} Eisensilikat Granulat, eine glasige Kupferschlacke, erhältlich von Sibelco Deutschland GmbH, mit einer Rohdichte von etwa 3.7 kg/l und einem Gehalt an Eisen, gerechnet als FeO, von etwa 51 Gew.-%.

Sikadur^{®}-42 HE ist ein dreikomponentiger Vergussmörtel auf Epoxidharzbasis, erhältlich von Sika Schweiz AG.

Der Polycarboxylatether ist ein Kammpolymer mit Carbonsäuregruppen und Polyethylenglykol-Seitenketten, Sika Viscocrete^{®} 430P erhältlich von Sika Schweiz AG.

### Messmethoden

Die **Druckfestigkeit** und die **Biegezugfestigkeit** wurden an 40 x 40 x 160 mm Prüfkörpern mit Prüfmaschinen gemäss DIN EN 196-1 und EN 12190 bestimmt.

Zur Bestimmung des **spezifischen elektrischen Durchgangswiderstandes** wurden die gegenüber liegenden 40 x 40 mm Flächen der 40 x 40 x 160 mm-Prüfkörper mit elektrisch leitfähigem Gel bestrichen und an beide Flächen eine Stahlelektrode, die die ganze Fläche bedeckt, bündig angelegt. Der elektrische Durchgangswiderstand der Prüfkörper wurde durch Anlegen einer Spannung von 100 mV AC bei einer Frequenz von 1 kHz und 10 kHz an die beiden Elektroden bestimmt.

Die **thermische Leitfähigkeit** wurde gemäss ASTM D5470-06 mit dem ZFW TIM-Tester der Firma ZFW (Zentrum für Wärmemanagement) Stuttgart, Deutschland, an Prüfkörpern von 30 mm Durchmesser und 2 mm Höhe bestimmt.

### Polyurethan-Matrix

Für die Beispiele wurden als Polyurethan-Matrix die in Tabelle 1 und 2 beschriebenen Polyol-Komponenten (A-Komponente) und Polyisocyanat-Komponenten (B-Komponente) verwendet.

Für jede Zusammensetzung wurden die in den Tabellen 1 und 2 angegebenen Inhaltsstoffe in den angegebenen Mengen (in Gewichtsteilen) der Polyol-Komponente A mittels eines Vakuumdissolvers unter Feuchtigkeitsausschluss zu einer homogenen Paste verarbeitet und aufbewahrt. Ebenso wurden die in den Tabellen 1 und 2 angegebenen Inhaltsstoffe der Polyisocyanat-Komponente B aufbewahrt.

**Tabelle 1: Zusammensetzungen der Polyurethan-Matrices (alle Angaben ausser Verhältnisse in Gew.-%)**

| | **A** | **B** | **C** | **D** | **E** | **F** |
|---|---|---|---|---|---|---|
| **A-Komponente** | | | | | | |
| Setathane^{®} 1150 | 65.6 | 65.6 | 59.7 | 59.7 | 55.3 | 55.3 |
| Desmophen^{®} T4011 | 4.3 | 4.3 | 3.7 | 3.7 | 3.5 | 3.5 |
| Hydroxy-term iniertes Polybutadien-Polyol | 19.0 | 19.0 | 18.7 | 18.7 | 17.3 | 17.3 |

| Kettenverlängerer | | | | | | |
|---|---|---|---|---|---|---|
| - 1,4-Butandiol | 4.3 | 4.3 | - | - | - | - |
| - 1,5-Pentandiol | - | - | 11.2 | 11.2 | - | - |
| - Ethyl-1,3-hexandiol | - | - | - | - | 13.8 | 13.8 |
| Sylosiv^{®} | 6.9 | 6.9 | 6.6 | 6.6 | 10.0 | 10.0 |
| Prozesschemikalien¹⁾ | 0.1 | 0.1 | 0.1 | 0.1 | 0.1 | 0.1 |

| **B-Komponente** | | | | | | |
|---|---|---|---|---|---|---|
| Desmodur^{®} VL⁶⁾ | 100 | - | 100 | - | 100 | - |
| Desmodur^{®} CD-L⁷⁾ | - | 100 | - | 100 | - | 100 |
| **Mischverhältnis A:B** [Gew.-%/Gew.-%] | 100: 49.4 | 100: 52.9 | 100: 65.1 | 100: 69.7 | 100: 57.5 | 100: 61.6 |
| NCO:OH | 1.11 | 1.11 | 1.11 | 1.11 | 1.10 | 1.10 |

| | | | | | | |
|---|---|---|---|---|---|---|
| ¹⁾ Entschäumer und Katalysator | | | | | | |

**Tabelle 2: Zusammensetzungen der Polyurethan-Matrices (alle Angaben ausser Verhältnisse in Gew.-%)**

| | **G** | **H** | **I** | **J** |
|---|---|---|---|---|
| **A-Komponente** | | | | |
| Neukapol^{®} 1119 | 43.9 | 43.9 | 58.0 | 58.0 |
| Neukapol^{®} 1582 | 22.0 | 22.0 | 29.0 | 29.0 |
| Hydroxy-term iniertes Polybutadien-Polyol | 22.0 | 22.0 | - | - |
| Sylosiv^{®} | 12.0 | 12.0 | 12.8 | 12.8 |
| Prozesschemikalien¹⁾ | 0.1 | 0.1 | 0.1 | 0.1 |

| **B-Komponente** | | | | |
|---|---|---|---|---|
| Desmodur^{®} VL | 100 | - | 100 | - |
| Desmodur^{®} CD-L | - | 100 | - | 100 |
| **Mischverhältnis A:B** [Gew.-%/Gew.-%] | 100: 64.6 | 100: 69.2 | 100: 81.9 | 100: 87.8 |
| NCO:OH | 1.07 | 1.07 | 1.07 | 1.07 |

| | | | | |
|---|---|---|---|---|
| ¹⁾ Entschäumer und Katalysator | | | | |

### Feststoff-Kom ponente

Für die Herstellung der Feststoff-Komponente wurden die festen Bestandteile gemäss Tabelle 3 trocken gemischt und während des Mischens eine Polycarboxylatether-Lösung aufgesprüht.

**Tabelle 3: Zusammensetzung der Feststoff-Komponente**

| **Bestandteil** | **Anteil [Gew.-%]** |
|---|---|
| Mischung aus Kalkstein-und Schwerspatmehl, < 0.1 mm | 25.2 |
| Sand (Schlackesand oder Quarzsand)*, 0.12-3.2 mm | 74.3 |
| Polycarboxylatether-Lösung (20 Gew.-% Polycarboxylatether gelöst in 80 Gew.-% Benzylalkohol) | 0.5 |

| | |
|---|---|
| * Sand-Typ siehe Beispiele. | |

### Herstellung von aushärtbaren Vergussmörteln und Prüfkörpern

Die Polyol-Komponenten A und Polyisocyanat-Komponenten B aus den Tabellen 1 und 2 wurde mittels eines SpeedMixers^{®} (DAC 150 FV, Hauschild) während 30 Sekunden zu einer homogenen Paste verarbeitet (Mischverhältnisse siehe Tabellen 1 und 2). Anschliessend wurde eine Feststoff-Komponente gemäss Tabelle 3 zugegeben und gut eingemischt. Die Feststoff-Komponente wies dabei (sofern nicht anders angegeben) stets einen Anteil von 89.5 Gew.-% auf während die vermischten Polyol-Komponenten A und Polyisocyanat-Komponenten B zusammen einen Anteil von 10.5 Gew.-% aufwiesen.

Zu Vergleichszwecken wurden zudem aushärtbare Zusammensetzungen und Prüfkörper basierend auf einer Epoxidharz-Matrix (im Folgenden als **SD** bezeichnet) wie folgt hergestellt: Sikadur^{®}-42 HE Komponente A (enthaltend das Epoxidharz) wurde mit der zugehörigen Komponente B (enthaltend den Härter) im Gewichtsverhältnis 3:1 gut gemischt und anschliessend eine selbst hergestellte Feststoff-Komponente gemäss Tabelle 3 zugegeben und gut eingemischt. Die Feststoff-Komponente wies dabei (sofern nicht anders angegeben) stets einen Anteil von 89.5 Gew.-% auf, während die vermischten Epoxidharz- und Härter Komponenten zusammen einen Anteil von 10.5 Gew.-% aufwiesen.

Zur Herstellung der Prüfkörper wurden die angemischten aushärtbaren Zusammensetzungen in Stahlformen gegossen und in der Schalung für 24 Stunden bei 20 °C gelagert. Danach wurden die Prüfkörper aus der Schalung genommen und bei 20 °C weiter gelagert. Nach 7 Tagen Lagerung wurden der spezifische elektrische Widerstand, die Festigkeit und die thermische Leitfähigkeit bestimmt.

### Festigkeit und elektrischer Durchgangswiderstand von Vergussmörteln

In den nachfolgenden Tabellen sind die Festigkeiten und elektrischen Durchgangswiderstand von verschiedenen Vergussmörteln angegeben.

Die Zeile "Bindemittel-Matrix" gibt die eingesetzte Polyurethan- oder Epoxidharz-Matrix an (siehe Tabellen 1 und 2), während die Zeile "Sand" den in der Feststoff-Komponente verwendeten Sand- oder Schlacketyp angibt (siehe Tabelle 3).

**Tabelle 4: Resultate bei Verwendung von Quarzsand und Desmodur^{®} VL als Polyisocyanat-Komponente in der Polyurethan-Matrix**

| | **Ref. 1** | **B1** | **B2** | **B3** | **B4** | **B5** |
|---|---|---|---|---|---|---|
| Bindemittel-Matrix | **SD** | **I** | **G** | **E** | **C** | **A** |
| Sand | Quarzsand | Quarzsand | Quarzsand | Quarzsand | Quarzsand | Quarzsand |
| Druckfestigkeit [MPa] | 104 | 99 | 71 | 74 | 82 | 64 |
| Biegezugfestigkeit [MPa] | 26 | 26 | 22 | 24 | 25 | 24 |
| Spezifischer elektrischer Durchgangswiderstand [MΩ·cm] bei 1 kHz | 243.0 | 21.4 | 23.3 | 24.0 | 24.5 | 24.6 |
| Faktor¹⁾ 1 kHz | | 0.09 | 0.10 | 0.10 | 0.10 | 0.10 |
| Spezifischer elektrischer Durchgangswiderstand [MΩ·cm] bei 10 kHz | 24.9 | 2.2 | 2.4 | 2.5 | 2.5 | 2.5 |
| Faktor 10 kHz | | 0.09 | 0.10 | 0.10 | 0.10 | 0.10 |

| | | | | | | |
|---|---|---|---|---|---|---|
| ¹⁾ Faktor um den der spezifische elektrische Durchgangswiderstand eines Mörtels nach Beispiel B1 bis B5 im Vergleich zu dem spezifischen elektrischen Durchgangswiderstand des Referenzmörtels Ref. 1 reduziert ist, z.B. Widerstand B1/Widerstand Ref. 1. | | | | | | |

**Tabelle 5: Resultate bei Verwendung von Quarzsand und Desmodur^{®} CD-L als Polyisocyanat-Komponente in der Polyurethan-Matrix**

| | **Ref. 1** | **B6** | **B7** | **B8** | **B9** | **B10** |
|---|---|---|---|---|---|---|
| Bindemittel-Matrix | **SD** | **J** | **H** | **F** | **D** | **B** |
| Sand | Quarzsand | Quarzsand | Quarzsand | Quarzsand | Quarzsand | Quarzsand |
| Druckfestigkeit [MPa] | 104 | 102 | 75 | 75 | 82 | 73 |
| Biegezugfestigkeit [MPa] | 26 | 27 | 23 | 24 | 26 | 27 |
| Spezifischer elektrischer Durchgangswiderstand [MΩ·cm] bei 1 kHz | 243.0 | 26.0 | 23.3 | 24.5 | 25.9 | 23.6 |
| Faktor¹⁾ 1 kHz | | 0.11 | 0.10 | 0.10 | 0.11 | 0.11 |
| Spezifischer elektrischer Durchgangswiderstand [MΩ·cm] bei 10 kHz | 24.9 | 2.7 | 2.4 | 2.5 | 2.7 | 2.4 |
| Faktor 10 kHz | | 0.11 | 0.10 | 0.10 | 0.11 | 0.10 |

| | | | | | | |
|---|---|---|---|---|---|---|
| ¹⁾ s. Tabelle 4 oben | | | | | | |

**Tabelle 6: Resultate bei Verwendung von Kupferschlacke (CS) und Desmodur^{®} VL als Polyisocyanat-Komponente in der Polyurethan-Matrix**

| | **Ref. 2** | **B11** | **B12** | **B13** | **B14** | **B15** |
|---|---|---|---|---|---|---|
| Bindemittel-Matrix | **SD** | **I** | **G** | **E** | **C** | **A** |
| Sand | CS | CS | CS | CS | CS | CS |
| Druckfestigkeit [MPa] | 116 | 93 | 66 | 65 | 82 | 51 |
| Biegezugfestigkeit [MPa] | 31 | 26 | 20 | 23 | 29 | 21 |
| Spezifischer elektrischer Durchgangswiderstand [MΩ·cm] bei 1 kHz | 24.9 | 15.5 | 15.3 | 16.7 | 15.5 | 15.8 |
| Faktor¹⁾ 1 kHz | | 0.62 | 0.61 | 0.67 | 0.62 | 0.63 |
| Spezifischer elektrischer Durchgangswiderstand [MΩ·cm] bei 10 kHz | 3.3 | 1.6 | 1.6 | 1.8 | 1.6 | 1.7 |
| Faktor 10 kHz | | 0.48 | 0.48 | 0.55 | 0.48 | 0.52 |

| | | | | | | |
|---|---|---|---|---|---|---|
| ¹⁾ s. Tabelle 4 oben | | | | | | |

**Tabelle 7: Resultate bei Verwendung von Kupferschlacke (CS) und Desmodur^{®} CD-L als Polyisocyanat-Komponente in der Polyurethan-Matrix**

| | **Ref. 2** | **B16** | **B17** | **B18** | **B19** | **B20** |
|---|---|---|---|---|---|---|
| Bindemittel-Matrix | **SD** | **J** | **H** | **F** | **D** | **B** |
| Sand | CS | CS | CS | CS | CS | CS |
| Druckfestigkeit [MPa] | 116 | 95 | 68 | 67 | 69 | 63 |
| Biegezugfestigkeit [MPa] | 31 | 27 | 20 | 20 | 25 | 25 |
| Spezifischer elektrischer Durchgangswiderstand [MΩ·cm] bei 1 kHz | 24.9 | 15.8 | 16.1 | 16.3 | 15.5 | 16.1 |
| Faktor¹⁾ 1 kHz | | 0.63 | 0.65 | 0.65 | 0.62 | 0.65 |
| Spezifischer elektrischer Durchgangswiderstand [MΩ·cm] bei 10 kHz | 3.3 | 1.7 | 1.7 | 1.7 | 1.7 | 1.7 |
| Faktor 10 kHz | | 0.52 | 0.52 | 0.52 | 0.52 | 0.52 |

| | | | | | | |
|---|---|---|---|---|---|---|
| ¹⁾ s. Tabelle 4 oben | | | | | | |

### Thermische Leitfähigkeit

Weiter wurden die thermischen Leitfähigkeiten von verschiedenen Vergussmörteln gemessen. Dabei wurden Prüfkörper mit 30 mm Durchmesser und 2 mm Höhe durch Giessen in entsprechende Formen hergestellt und 7 Tage bei 20°C aushärten gelassen.

**Tabelle 8: Resultate thermische Leitfähigkeiten**

| | **Ref. 3** | **B21** | **B22** | **B23** | **B24** | **B25** | **B26** |
|---|---|---|---|---|---|---|---|
| Bindemittel-Matrix | **SD** | **I** | **I** | **I** | **I** | **I** | **I** |
| Sand | Quarzsand | | HOS | Raulit | HS | EOS | CS |
| Therm ische Leitfähigkeit [W/m K]] | 2.8 | 2.9 | 1.1 | 1.1 | 0.9 | 1.0 | 0.9 |

Durch die Verwendung von Schlacke anstelle von Quarzsand kann die thermische Leitfähigkeit reduziert werden.

### Korrosionsbeständigkeit

Um die Korrosionsbeständigkeit der Bindemittelzusammensetzungen bzw. von daraus hergestellten Probenkörpern zu testen, wurden verschiedene Probenkörper wie vorstehend beschrieben hergestellt und 7 Tage bei 20°C aushärten gelassen. Daraufhin wurde die Druckfestigkeit nach ASTM D695 bestimmt.

Danach wurden die Probenkörper für 21 Tage (21d) jeweils in reinem Wasser (H₂O), in 10 Vol.-%-iger Essigsäure (AcOH) oder in 50 Gew.-%-iger Natronlauge (NaOH) gelagert und anschliessend bis zur Gewichtskonstanz getrocknet. Daraufhin wurde erneut die Druckfestigkeit nach ASTM D695 bestimmt.

Fig. 2 zeigt die Druckfestigkeiten von Probenkörpern basierend auf der Polyurethan-Matrix **E** und einer Feststoff-Komponente wie sie vorstehen beschrieben ist, wobei als Sand wahlweise Quarzsand, HS, CS, Raulit, HOS oder EOS eingesetzt wurde.

Dabei ist zu erkennen, dass die Druckfestigkeiten unabhängig vom verwendeten Medium (H₂O, AcOH oder NaOH) nicht beeinträchtigt werden, sondern im Gegenteil während der Lagerung zunehmen.

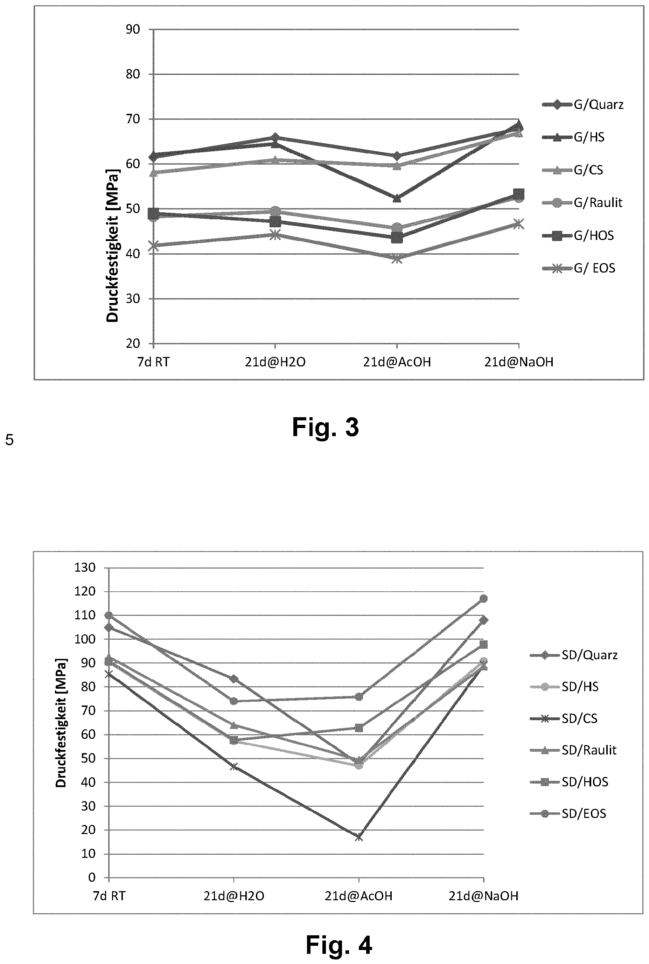

Fig. 3 zeigt die Druckfestigkeiten von Probenkörpern basierend auf der Polyurethan-Matrix **G** und einer Feststoff-Komponente wie sie vorstehen beschrieben ist, wobei als Sand wahlweise Quarzsand, HS, CS, Raulit, HOS oder EOS eingesetzt wurde.

Auch in diesem Fall nehmen die Druckfestigkeiten in H₂O und NaOH nach Lagerung zu, während in AcOH bei gewissen Feststoff-Komponenten eine geringe Abnahme feststellbar ist.

Fig. 4 zeigt zum Vergleich die Resultate von Probenkörper basierend auf der Epoxidharz-Matrix **SD** und einer Feststoff-Komponente wie sie vorstehen beschrieben ist, wobei als Sand wiederum wahlweise Quarzsand, HS, CS, Raulit, HOS oder EOS eingesetzt wurde.

Deutlich zu erkennen ist die starke Abnahme der Druckfestigkeit bei Lagerung in H₂O und AcOH. Einzig in NaOH bleibt die Druckfestigkeit erhalten, oder diese steigt leicht an während der Lagerung.

### Vergussmörtel mit unterschiedlichen Mengen an Polyurethan-Matrix

Tabelle 9 zeigt die Zusammensetzungen und Druckfestigkeiten von weiteren Vergussmörtel, bei welchen die Mengen der Bindemittel-Matrix und die Feststoffkomponenten modifiziert wurden.

**Tabelle 9: Vergussmörtel mit unterschiedlichen Mengen an Sand und Polyurethan-Matrix**

| | **B27** | **B28** | **B29** | **B30** | **B31** | **B32** |
|---|---|---|---|---|---|---|
| Bindemittel-Matrix/ Anteil [Gew.-%] | **E** 6.0 | **E** 6.0 | **E** 20.0 | **E** 20.0 | **E** 12.5 | **E** 12.5 |
| Schlacke/ Anteil [Gew.-%] | CS 79.9 | EOS 79.9 | CS 66.9 | EOS 66.9 | CS 75.4 | EOS 75.4 |
| Mischung aus Kalkstein-und Schwerspatmehl [Gew.-%] | 14.0 | 14.0 | 13.0 | 13.0 | 12.0 | 12.0 |
| Polycarboxylatether - Lösung [Gew.-%] | 0.1 | 0.1 | 0.1 | 0.1 | 0.1 | 0.1 |
| Druckfestigkeit [MPa] | 36.6 | 18.3 | 40.7 | 31.9 | 55.0 | 33.8 |

Die Resultate in Tabelle 9 zeigen, dass Anteil der Bindemittel-Matrix im Bereich von mehr als 6.0 Gew.-% vorteilhaft ist in Bezug auf die Druckfestigkeit. Bei Kupferschlacke (CS) und Elektroofenschlacke (EOS), zeigt der Versuch mit 12.5 Gew.-% Bindemittel-Matrix die höchste Druckfestigkeit.

### Kontrollierte Schäumung mit Molekularsieb

Um den Einfluss des Anteils an Molekularsieb auf die Schäumung zu analysieren, wurde ausgehend von Bindemittelzusammensetzung **B3** (siehe Tabelle 4; Bindemittelmatrix E und Quarzsand als Sand-Typ) in mehreren Experimenten der Anteil an Molekularsieb reduziert. Tabelle 10 gibt einen Überblick über die Resultate.

Die Proben der A-Komponente mit und ohne Füllstoffe und Trocknungsmittel wurden in Headspace GC-Probengläschen eingewogen und eine definierte Menge Dichlormethan als Extraktionsmitte zugegeben. Nach einer Extraktionszeit von mindestens einer Stunde bei Raumtemperatur wurde der Wassergehalt des reinen Dichlormethans und der filtrierten Lösungen der A-Komponente in Dichlormethan mittels coulometrischer Karl-Fischer-Titration bestimmt.

**Tabelle 10: Einfluss des Anteils an Molekularsieb in der Polyurethanmatrix E auf die Schäumung, die Dichte und die Festigkeiten von Vergussmörteln.**

| | **Anteil Molekularsieb** | | | | |
|---|---|---|---|---|---|
| | **4/4** | **3/4** | **2/4** | **1/4** | **0** |
| Konzentration Molsiebpulver in Matrix [Gew.-%] | 10 | 7.5 | 5.0 | 2.5 | 0 |
| Wassergehalt [Gew.-%] | 0.13 | 0.11 | 0.14 | 0.10 | 0.10 |
| Dichte [g/cm³] | 2.48 | 2.43 | 2.38 | 2.25 | 1.84 |
| Schäumung [Vol.-%] | 0 | 2 | 4 | 10 | 35 |
| Druckfestigkeit [MPa] | 74 | 73 | 69 | 55 | 29 |
| Biegezugfestigkeit [MPa] | 24 | 25 | 24 | 18 | 12 |

Ein Anteil von "4/4" an Molekularsieb entspricht dem ursprünglichen Anteil von 10 Gew.-% in der A-Komponente bzw. der Polyurethan-Matrix (vgl. Tabelle 4). Beim Versuch mit "3/4" wurde der Anteil auf 7.5 Gew.-% reduziert (Ausgleich durch Erhöhung der anderen Bestandteile), bei "2/4" auf 5 Gew.-% und bei "1/4" auf 2.5 Gew.-%. "0" entspricht einer Formulierung ganz ohne Molekularsieb.

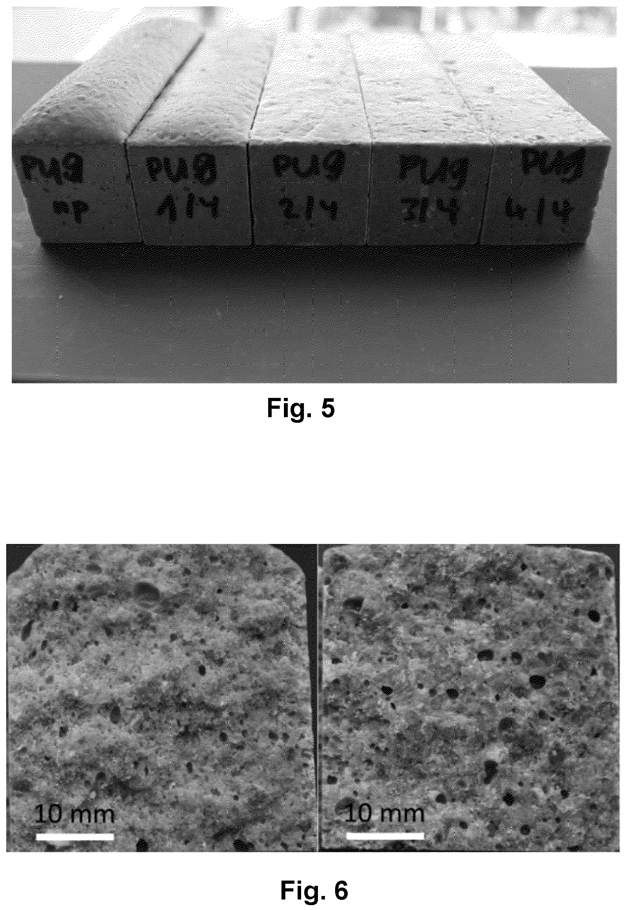

Fig. 5 zeigt die entsprechenden und ausgehärteten Vergussmörtel. Deutlich zu erkennen ist die Volumenzunahme mit abnehmendem Anteil an Molekularsieb von links nach rechts.

In Fig. 6 auf der linken Seite ist ein Querschnitt durch die reaktiv geschäumte Probe, welche ohne Molekularsieb hergestellt wurde, gezeigt (Probe "0" in Tabelle 10 bzw. der in Fig. 5 links aussen liegende Probenkörper). Auf der rechten Seite in Fig. 6 ist ein Querschnitt durch die nicht reaktiv geschäumte Probe, welche mit der ursprünglichen Menge von 10 Gew.-% Molekularsieb in der A-Komponente hergestellt wurde, gezeigt (Probe "4/4" in Tabelle 10 bzw. der in Fig. 5 rechts aussen liegende Probenkörper). Die sichtbaren Poren sind das Resultat des Ausgasens von im Bindemittel gelöster und in der Bindemittelzusammensetzung dispergierter Luft während der Aushärtung.

Während die Probe ohne Molekularsieb weniger Poren mit grösseren Durchmessern aufweist, weist die Probe mit Molekularsieb vermehrt kleinere Poren mit einem Durchmesser < 1 mm auf.

Des Weiteren wurden Schliffe von ausgehärteten Vergussmörteln hergestellt und diese durch Rasterelektronenmikroskopie untersucht (Rasterelektronenmikroskopie (REM) mit energiedispersiver Röntgenanalyse (EDX); REM: Zeiss SIGMA 300 VP, Elektronenquelle: Schottky Feld Emission; Detektoren: In-Iens (inlens) und Sekundarelektronendetektor (SE2), variabler Druck (VP) Kaskadenstromdetektor (C2D), hochauflösender Rückstreuelektronendetektor (HDBSD), multimode Transmission REM Detektor (STEM); Energiedispersive Röntgenspektroskopie: AMETEK EDAX, Detektor: Apollo X-SDD, Auflösung 127.7eV).

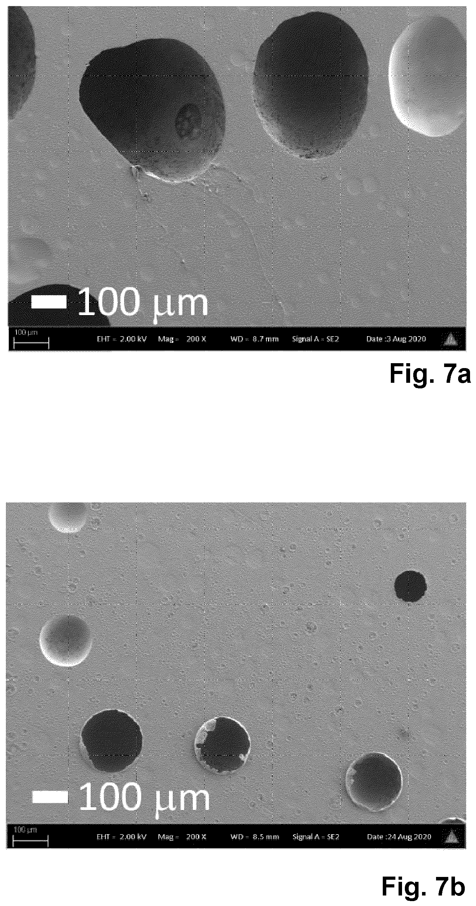

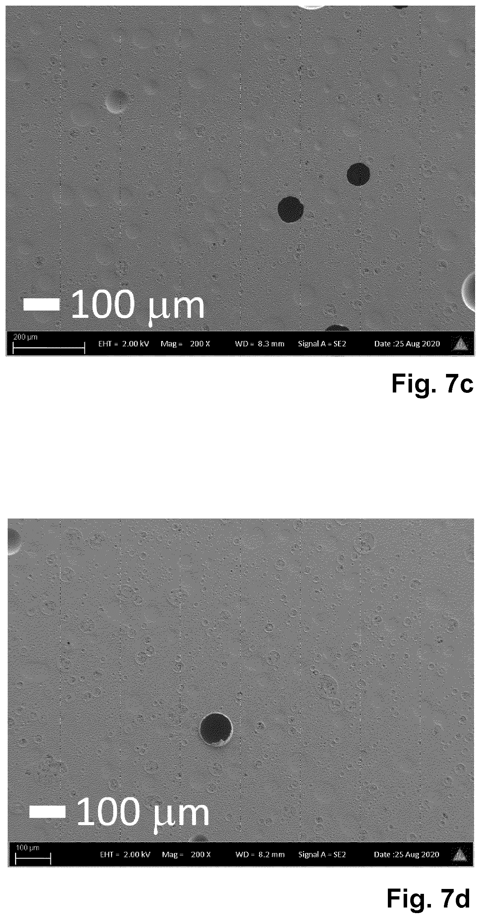

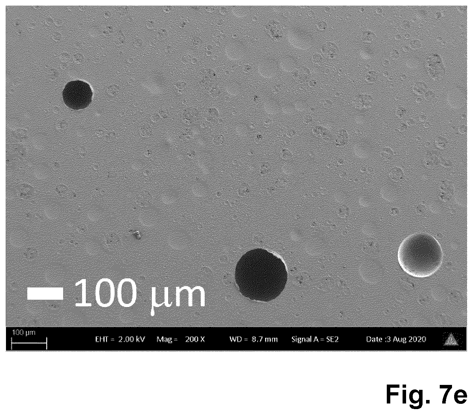

Die Fig. 7a - 7e zeigen die mit 200-facher Vergrösserung durch Rasterelektronenmikroskopie erhaltenen Bilder der ausgehärteten Polyurethan-Matrix E mit unterschiedlichen Anteilen an Molekularsieb. Die Probe ohne Molekularsieb (Fig. 7a) zeigt unregelmässig geformte, grosse Luftporen mit Durchmessern von 200 - 400 µm. Die Probe mit 1/4-Anteil an Molekularsieb (Fig. 7b) zeigt bereits deutlich weniger Luftporen als die Probe ohne Molekularsieb und die Poren weisen alle eine rundere Form auf. Die Durchmesser der Poren bewegen sich dabei in einem Bereich von ca. 100-200µm. Die Proben mit 2/4-Anteil (Fig. 7c) und 3/4-Anteil (Fig. 7d) und 4/4-Anteil (Fig. 7e) sind sehr ähnlich und weisen im Vergleich zur Probe mit 1/4-Anteil an Molekularsieb eine weniger hohe Porendichte auf, und die Porendurchmesser bewegen sich meist um 100 µm.

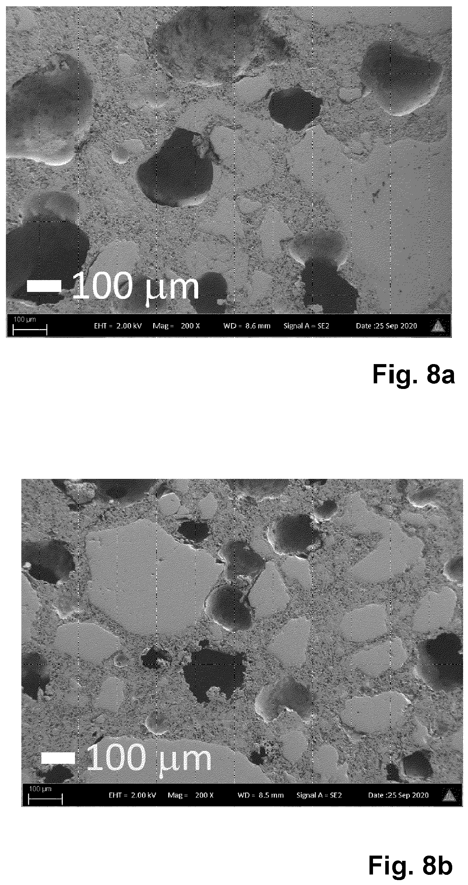

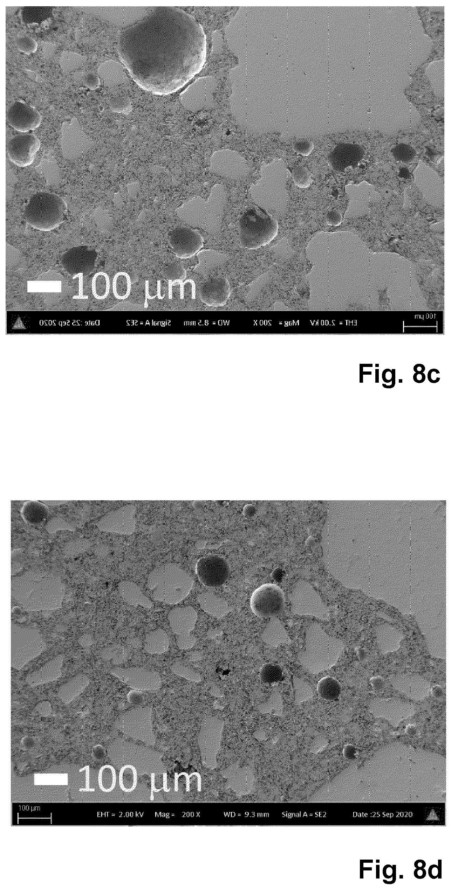

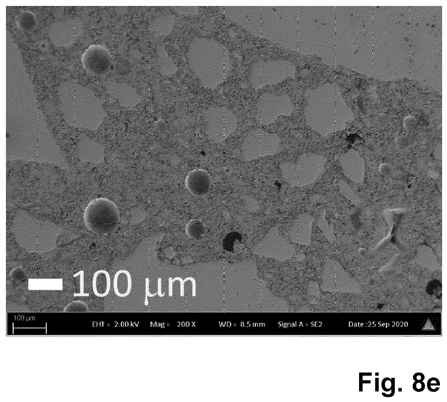

Die Fig. 8a - 8e zeigen die mit 200-facher Vergrösserung durch Rasterelektronenmikroskopie aufgenommenen Bilder von Proben der ausgehärteten Bindemittelmatrix E und 89 Gew.-% Quarzsand als Sand-Typ mit unterschiedlichen Anteilen an Molekularsieb. Die Probe ohne Molekularsieb (Fig. 8a) zeigt einen hohen Anteil an Poren. Diese weisen eine meist unregelmässige Form auf, typischerweise mit einem Durchmesser zwischen 50 - 250 µm. Es sind auch wenige Poren mit Durchmessern von 300 - 700µm in der Probe zu finden. Viele Poren scheinen mit angrenzenden Poren verbunden zu sein. Die Probe mit 1/4-Anteil an Molekularsieb (Fig. 8b) weist ebenfalls einen hohen Anteil an Poren auf, wenn auch geringer als die Probe ohne Molekularsieb. Die Form der Poren ist unregelmässig mit Durchmessern von 50 - 200µm, selten bis 400µm. In der Probe mit 2/4-Anteil an Molekularsieb (Fig. 8c) ist der Porenanteil weiter reduziert. Die Form der Poren ist nun mehrheitlich rund, wobei immer noch auch Poren mit einer unregelmässigen Form vorhanden sind. Der Durchmesser der Poren ist zwischen 40 und 150µm, wobei selten auch Poren mit bis zu 250 µm zu finden sind. In der Probe mit 3/4-Anteil (Fig. 8d) an Molekularsieb ist der Porenanteil nochmals stark reduziert und die Porenform meist rund. Die Porengrössen bewegen sich im Bereich von 30 - 120µm, wobei auch Poren mit bis zu 200µm Durchmesser vorhanden sind. Die Probe mit 4/4-Anteil an Molekularsieb (Fig. 8e) weist tendenziell geringfügig weniger Poren auf als die Probe mit 3/4-Anteil. Auch der typische Durchmesser ist nochmals geringfügig auf 30 - 100µm verkleinert (selten bis 200 µm). Die Form der Poren ist weiterhin meist rund.

Dies zeigt, dass die Porenstruktur, die Porendichte und die Dichte der geschäumten Vergussmörtel somit alle Parameter, die unter dem Begriff «Schäumung» zusammengefasst sind, durch das Molekularsieb gezielt beeinflusst werden können.

### Kontrollierte Schäumung mit Calciumoxid

Um den Einfluss des Anteils an Calciumoxid auf die Schäumung und die Dichte zu analysieren, wurde eine Bindemittelmatrix E' auf Basis von Matrix E (siehe Tabelle 1) bereitgestellt, dabei aber das Molekularsieb (Sylosiv^{®}) durch unterschiedliche Mengen an pulverförmigem Calciumoxid ersetzt. Die so hergestellte Bindemittelmatrix E' wurde dann zusammen mit Quarzsand (analog dem Versuch B3; Tabelle 4) zu Vergussmörteln verarbeitet, welche bezüglich Dichte und Schäumung untersucht wurden. Tabelle 11 gibt einen Überblick über die Resultate.

Ebenfalls bestimmt wurde der Wassergehalt der Proben nach dem Anmischen. Die Proben der A-Komponente mit und ohne Füllstoffe und Trocknungsmittel wurden in Headspace GC-Probengläschen eingewogen und eine definierte Menge Dichlormethan als Extraktionsmitte zugegeben. Nach einer Extraktionszeit von mindestens einer Stunde bei Raumtemperatur wurde der Wassergehalt des reinen Dichlormethans und der filtrierten Lösungen der A-Komponente in Dichlormethan mittels coulometrischer Karl-Fischer-Titration bestimmt.

**Tabelle 11: Einfluss des Anteils an Calciumoxid in der Polyurethanmatrix E' auf die Schäumung und die Dichte von Vergussmörteln.**

| | **Anteil Calciumoxid** | | | | | |
|---|---|---|---|---|---|---|
| | **4/4** | **3/4** | **2/4** | **1/4** | **1/7** | **1/10** |
| Konzentration Calciumoxid in Matrix [Gew.-%] | 10 | 7.5 | 5.0 | 2.5 | 1.5 | 1.0 |
| Wassergehalt [Gew.-%] | - | 0.02 | - | 0.05 | 0.05 | 0.04 |
| Dichte [g/cm³] | 3.70 | 3.52 | 3.45 | 3.30 | 2.94 | 2.75 |
| Schäumung [Vol.-%] | 0 | 5 | 7 | 11 | 21 | 26 |

Die Resultate zeigen, dass über den Anteil an Calciumoxid vergleichbar wie mit dem Molekularsieb gezielt die Schäumung und die Dichte eingestellt werden können.

## Patentansprüche

1. Verwendung eines Trocknungsmittels zur Beeinflussung der Dichte einer aushärtbaren Bindemittelzusammensetzung umfassend a) mindestens ein organisches Bindemittel, umfassend ein Polyisocyanat und ein Polyol, und b) mindestens 50 Gew.-% eines anorganischen Füllstoffs F, insbesondere in Form von Quarzaggregaten und/oder Schlacke, wobei die Gewichtsanteile bezogen sind auf 100 Gew.-% Bindemittelzusammensetzung.

2. Verwendung nach Anspruch 1, wobei das Trocknungsmittel ausgewählt ist aus einem Molekularsieb, Calciumoxid, Calciumchlorid, Natriumcarbonat, Kaliumcarbonat, Calciumsulfat und/oder Magnesiumsulfat, insbesondere handelt es sich um ein Molekularsieb und/oder um Calciumoxid, besonders bevorzugt um ein Molekularsieb.

3. Verwendung nach wenigstens einem der Ansprüche 1 - 2, wobei das Trocknungsmittel mit einem Anteil von maximal 1 Gew.-%, insbesondere 0.001 - 1 Gew.-%, bevorzugt 0.05 - 0.8 Gew.-%, bezogen auf 100 Gew.-% der Bindemittelzusammensetzung eingesetzt wird.

4. Verwendung nach wenigstens einem der Ansprüche 1 - 3, wobei das Trocknungsmittel mit einem Anteil von maximal 15 Gew.-%, bevorzugt 0.001 - 15 Gew.-%, insbesondere 0.01 - 14 Gew.-%, besonders bevorzugt 0.1 - 13 Gew.-%, bezogen auf das Gesamtgewicht der Polyole und des Trocknungsmittels zusammen, eingesetzt wird.

5. Verwendung nach wenigstens einem der Ansprüche 1 - 4, wobei der Gehalt an Wasser in der aushärtbaren Bindemittelzusammensetzung maximal 0.5 Gew.-%, insbesondere 0.01 - 0.45 Gew.-%, im Speziellen, 0.05 - 0.35 Gew.-%, beträgt, bezogen auf das Gesamtgewicht der Bindemittelzusammensetzung.

6. Verwendung nach wenigstens einem der Ansprüche 1 - 5, wobei in der ausgehärteten Bindemittelzusammensetzung Poren mit einem Porendurchmesser im Bereich von < 4 mm, insbesondere < 1 mm, im Speziellen < 0.1 mm erzeugt werden oder vorliegen, insbesondere handelt es sich um Poren mit einer Porengrösse von 10 - 500 µm, im Speziellen 50 - 200 µm, im Besonderen 75 - 150 µm.

7. Verwendung nach wenigstens einem der Ansprüche 1 - 6, wobei der Füllstoff F eine Partikelgrösse von wenigstens 0.1 mm, insbesondere 0.1 mm bis 3.5 mm, aufweist, wobei weiter bevorzugt wenigstens drei unterschiedliche Kornfraktionen vorliegen, wobei eine erste Kornfraktion eine Korngrösse im Bereich von 0.125 - 0.25 mm, eine zweite Kornfraktion eine Korngrösse im Bereich von 0.5 - 0.8 mm und eine dritte Kornfraktion eine Korngösse im Bereich von 2.0 - 3.15 mm, aufweist.

8. Verwendung nach wenigstens einem der Ansprüche 1 - 7, wobei der Füllstoff F in Form von Quarzaggregaten, Schlacke oder einer Mischung aus Schlacke und Quarzaggregaten vorliegt, wobei die Schlacke, falls vorhanden, ausgewählt ist aus der Gruppe bestehend aus Hochofenschlacken, insbesondere Hochofenstückschlacken und Hüttensanden, Stahlschlacken, Metallhüttenschlacken, insbesondere Kupferschlacken, und Schlacken aus der Abfallverbrennung, wobei Hochofenschlacken, Stahlschlacken und Metallhüttenschlacken bevorzugt sind.

9. Verwendung nach wenigstens einem der Ansprüche 1 - 8, **dadurch gekennzeichnet, dass** ein zusätzliches Füllstoffmaterial vorliegt, welches vom Füllstoff F verschieden ist, wobei das zusätzliche Füllstoffmaterial bevorzugt eine Partikelgrösse von maximal 0.1 mm aufweist.

10. Verwendung nach wenigstens einem der Ansprüche 1 - 9, wobei das Polyisocyanat und das Polyol zusammen einen Anteil von mindestens 5 Gew.-%, bevorzugt mindestens 10 Gew.-%, im Besonderen 8 - 22 Gew.-%, im Speziellen 10 - 15 Gew.-%, aufweisen, bezogen auf 100 Gew.-% der Bindemittelzusammensetzung.

11. Verwendung nach wenigstens einem der Ansprüche 1 - 10, wobei das organische Bindemittel mindestens eine Mischung von Polyolen mit unterschiedlicher OH-Funktionalität beinhaltet.

12. Aushärtbare Bindemittelzusammensetzung, insbesondere erhältlich durch die Verwendung nach einem der Ansprüche 1 - 11, umfassend: a) mindestens ein organisches Bindemittel, umfassend ein Polyisocyanat und ein Polyol, b) mindestens 50 Gew.-% eines anorganischen Füllstoffs F, insbesondere Quarzaggregate und/oder Schlacke, und c) ein Trocknungsmittel, wobei die Gewichtsanteile bezogen sind auf 100 Gew.-% Bindemittelzusammensetzung.

13. Bindemittelzusammensetzung nach Anspruch 12, enthaltend:
- 3 bis 40 Gew.-% Polyisocyanate,
- 3 bis 40 Gew.-% Polyole,
- 50 bis 93.999 Gew.-% Füllstoff F, insbesondere Schlacke und/oder Quarzaggregate, wobei bevorzugt mindestens 20 Gew.-% des Füllstoffs F eisenhaltige Schlacke ist,
- 0.001 - 1 Gew.-%, insbesondere 0.05 - 0.8 Gew.-% Trocknungsmittel, insbesondere ein Molekularsieb und/oder Calciumoxid,
- optional 10 bis 40 Gew.-%, insbesondere 15 bis 35 Gew.-%, im Speziellen 20 bis 30 Gew.-%, zusätzliches Füllstoffmaterial, insbesondere Kalkstein und/oder Schwerspat,
- 0 bis 0.5 Gew.-% Wasser, und
- 0 bis 15 Gew.-% weitere Additive,
bezogen auf 100 Gew.-% Bindemittel-Zusammensetzung.

14. Mehrkomponentensystem zur Herstellung einer aushärtbaren Bindemittelzusammensetzung, wie es in einem der vorangehenden Ansprüche beschrieben ist, umfassend mindestens eine PolyisocyanatKomponente, umfassend mindestens ein Polyisocyanat, und mindestens eine Polyol-Komponente, umfassend mindestens ein Polyol, wobei der Füllstoff F, das Trocknungsmittel und optional weitere Inhaltsstoffe in der Polyisocyanat-Komponenten, der Polyol-Komponenten und/oder einer gegebenenfalls vorhandenen weiteren Komponente, insbesondere einer Feststoff-Komponente, vorhanden sind.

15. Ausgehärtete Bindemittelzusammensetzung, erhalten durch Aushärten der Bindemittelzusammensetzung gemäss einem der Ansprüche 12 - 13 oder durch Vermischen der Komponenten und Aushärten des Mehrkomponentensystems gemäss Anspruch 14.
